# EUROPEAN PATENT APPLICATION

(11) **EP 4 693 406 A1**
(43) Date of publication of application: **11.02.2026**
(21) Application number: 24784152.1
(22) Date of filing: 28.03.2024
(51) Int. Cl.: H01L 29/10

(54) **COMMUNICATION METHOD AND COMMUNICATION APPARATUS**

(30) Priority: 06.04.2023 CN 202310388419
(71) Applicant: Huawei Technologies Co., Ltd., Shenzhen, Guangdong 518129 (CN)
(72) Inventor: YOU, Chunhua, Shenzhen, Guangdong 518129 (CN); FAN, Qiang, Shenzhen, Guangdong 518129 (CN); GU, Zhifang, Shenzhen, Guangdong 518129 (CN); ZHANG, Hongzhuo, Shenzhen, Guangdong 518129 (CN); LOU, Chong, Shenzhen, Guangdong 518129 (CN)
(74) Representative: Maiwald GmbH
(86) International application number: PCT/CN2024/084275
(87) International publication number: WO 2024/208067

(57) **Abstract**

This application provides a communication method and a communication apparatus, which are applied to the field of L1/L2 triggered mobility. The method includes: A first network device receives information about a timing advance (timing advance, TA) of a first candidate cell, where the first candidate cell does not belong to the first network device; and the first network device sends an identifier of a target cell of a switch and first indication information to a terminal device, where the first indication information indicates to access the target cell in a random access channel-skip manner, and the target cell is the first candidate cell. Specifically, on the premise that the first network device has obtained the information about the TA of the first candidate cell, the first network device sends the first indication information and the identifier of the target cell (which is the first candidate cell) of the switch to the terminal device, so that the terminal device can directly access the target cell without initiating a random access procedure for the first candidate cell. In this way, a quantity of random access procedures initiated by the terminal device can be reduced.

## Description

This application claims priority to Chinese Patent Application No. 202310388419.8, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In the communication field, movement of a terminal device triggers a cell switch in a plurality of preconfigured candidate cells, to be specific, a serving cell of the terminal device is switched to any one of the plurality of candidate cells. A cell switch decision is performed by a distributed unit (distributed unit, DU) in an access network device. Specifically, the terminal device reports a measurement report of a candidate cell to the DU; and the DU determines, based on the measurement report of the candidate cell, the candidate cell as a target cell of a switch, and indicates, in a cell switch command, to switch the serving cell of the terminal device to the target cell.

After completing the cell switch, the terminal device performs data communication with a DU corresponding to the target cell. Frequent movement of the terminal device may cause the DU to quickly trigger a plurality of subsequent cell switches in the plurality of candidate cells. In this case, the terminal device needs to initiate random access procedures to all the candidate cells, to obtain timing advances (timing advance, TA) of all the candidate cells.

However, in the foregoing manner, the terminal device initiates excessive random access procedures, resulting in high power consumption and high random access interference. How to reduce a quantity of random access procedures initiated by the terminal device is an urgent technical problem to be resolved.

### SUMMARY

This application provides a communication method and a communication apparatus, to reduce a quantity of random access procedures initiated by a terminal device.

According to a first aspect, a communication method is provided. The method includes: A terminal device determines information about a TA of a first candidate cell; and the terminal device reports the information about the TA of the first candidate cell to a first network device.

Specifically, the terminal device reports the information about the TA of the first candidate cell to the first network device, so that the first network device can obtain the information about the TA of the first candidate cell. Correspondingly, the first network device may determine, based on the information about the TA of the first candidate cell, whether the terminal device needs to be triggered to initiate a random access procedure for the first candidate cell. When the network device determines that the terminal device does not need to be triggered to initiate the random access procedure for the first candidate cell, a quantity of random access procedures that need to be initiated by the terminal device can be effectively reduced.

In a possible implementation, the method further includes: The terminal device receives indication information, where the indication information indicates to report information about a TA of a candidate cell, and the candidate cell includes the first candidate cell.

In this way, the terminal device may report the information about the TA of the candidate cell based on an indication of the indication information. This helps improve efficiency of information exchange between the terminal device and the network device.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

Specifically, the information about the TA of the first candidate cell may be the TA value, or may be the valid indication information, or may be the remaining valid time, or may be the time offset or the like. The information helps the first network device determine whether the terminal device needs to be triggered to initiate a quantity of random access procedures for the first candidate cell. When the first network device determines, based on one or more items of the foregoing information, not to trigger the terminal device to initiate the random access procedure for the first candidate cell, the quantity of random access procedures that need to be initiated by the terminal device can be effectively reduced.

In a possible implementation, that the terminal device receives the indication information includes: The terminal device receives the indication information and an identifier of a target cell of a switch that are from a second network device, where the target cell is a second candidate cell, and the second candidate cell belongs to the first network device; or the terminal device receives the indication information from the first network device.

Specifically, the terminal device may receive the indication information in a plurality of ways. For example, the terminal device receives the indication information from the second network device, where the second network device is a serving network device of the terminal device; or the terminal device receives the indication information from the first network device, where the first network device is a serving network device of the terminal device.

In a possible implementation, the second candidate cell is different from the first candidate cell.

In this way, this helps reduce the quantity of random access procedures that need to be initiated by the terminal device.

In a possible implementation, the indication information indicates to report the information about the TA of the first candidate cell.

In this way, the terminal device may report the information about the TA of the first candidate cell to the network device based on the indication of the indication information, to improve efficiency of information exchange between the terminal device and the network device.

In a possible implementation, the first candidate cell does not belong to the first network device.

According to a second aspect, a communication method is provided, including: A first network device receives information about a TA of a first candidate cell, where the first candidate cell does not belong to the first network device; and the first network device sends an identifier of a target cell of a switch and first indication information to a terminal device, where the first indication information indicates to access the target cell in a random access channel-skip manner, and the target cell is the first candidate cell.

Specifically, on the premise that the first network device has obtained the information about the TA of the first candidate cell, the first network device sends the first indication information and the identifier of the target cell (which is the first candidate cell) of the switch to the terminal device, so that the terminal device can directly access the target cell without initiating a random access procedure for the first candidate cell. In this way, a quantity of random access procedures initiated by the terminal device can be reduced.

Specifically, the first network device can determine, based on the obtained information about the TA of the first candidate cell, that the terminal device and/or a network device corresponding to the first candidate cell have/has the TA of the first candidate cell. After the first network device determines that the terminal device accesses the first candidate cell, uplink data transmission can be performed between the terminal device and the network device corresponding to the first candidate cell based on the information about the TA of the first candidate cell. Therefore, the first network device determines that the terminal device does not need to be triggered to initiate the random access procedure for the first candidate cell. In this way, the quantity of random access procedures initiated by the terminal device can be effectively reduced.

In a possible implementation, that the first network device receives the information about the TA of the first candidate cell includes: The first network device receives the information about the TA of the first candidate cell from the terminal device; or the first network device receives the information about the TA of the first candidate cell from a second network device.

In this way, the first network device may obtain the information about the TA of the first candidate cell in a plurality of ways. For example, the first network device receives the information about the TA of the first candidate cell from the terminal device, or the first network device receives the information about the TA of the first candidate cell from the second network device.

In a possible implementation, the method further includes: The first network device sends second indication information to the terminal device, where the second indication information indicates to report information about a TA of a candidate cell; or the second indication information indicates to report the information about the TA of the first candidate cell.

In this way, the first network device may receive the information about the TA of the first candidate cell from the terminal device.

In a possible implementation, the method further includes: The first network device sends request information to the second network device, where the request information is used to request the information about the TA of the first candidate cell.

In this way, the first network device may receive the information about the TA of the first candidate cell from the second network device.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

Specifically, the information about the TA of the first candidate cell may be the TA value, or may be the valid indication information, or may be the remaining valid time, or may be the time offset or the like. The information helps the first network device determine whether the terminal device needs to be triggered to initiate a quantity of random access procedures for the first candidate cell. When the first network device determines, based on one or more items of the foregoing information, not to trigger the terminal device to initiate the random access procedure for the first candidate cell, a quantity of random access procedures that need to be initiated by the terminal device can be effectively reduced.

According to a third aspect, a communication method is provided, including: A first network device sends first indication information to a terminal device, where the first indication information indicates the terminal device to obtain information about a TA of a first candidate cell; and the first network device sends an identifier of a target cell of a switch and second indication information to the terminal device, where the target cell is a second candidate cell, the second candidate cell belongs to a second network device, the second indication information indicates to report the information about the TA of the first candidate cell to the second network device, and the first candidate cell does not belong to the second network device.

Specifically, the first network device may indicate the terminal device to obtain the information about the TA of the first candidate cell, and indicate the terminal device to report the information about the TA of the first candidate cell to the second network device. Correspondingly, the second network device may determine, based on the obtained information about the TA of the first candidate cell, whether to trigger the terminal device to initiate a random access procedure for the first candidate cell. When the second network device determines that the terminal device does not need to be triggered to initiate the random access procedure for the first candidate cell, a quantity of random access procedures that need to be initiated by the terminal device can be effectively reduced.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

Specifically, the information about the TA of the first candidate cell may be the TA value, or may be the valid indication information, or may be the remaining valid time, or may be the time offset or the like. The information helps the second network device determine whether the terminal device needs to be triggered to initiate a quantity of random access procedures for the first candidate cell. When the second network device determines, based on one or more items of the foregoing information, not to trigger the terminal device to initiate the random access procedure for the first candidate cell, the quantity of random access procedures that need to be initiated by the terminal device can be effectively reduced.

In a possible implementation, the second candidate cell is different from the first candidate cell.

In this way, this helps reduce the quantity of random access procedures that need to be initiated by the terminal device.

According to a fourth aspect, a communication method is provided, including: A first network device obtains information about a timing advance TA of a first candidate cell, where the first candidate cell belongs to the first network device or a third network device, and the information about the TA of the first candidate cell is used to determine to use a random access channel-skip manner; and the first network device sends the information about the TA of the first candidate cell to a second network device by using a fourth network device.

Specifically, the first network device may send the information that is about the TA of the first candidate cell and that the first network device has to the second network device by using the fourth network device. This helps the second network device determine, based on the information about the TA of the first candidate cell, whether a terminal device needs to be triggered to initiate a random access procedure for the first candidate cell. When the second network device determines that the terminal device does not need to be triggered to initiate the random access procedure for the first candidate cell, a quantity of random access procedures that need to be initiated by the terminal device can be effectively reduced.

In a possible implementation, that the first network device obtains the information about the TA of the first candidate cell includes: The first network device receives the information about the TA of the first candidate cell from the fourth network device; or the first network device receives a contention-free random access preamble sent by the terminal device in the first candidate cell; and the first network device determines the information about the TA of the first candidate cell based on the contention-free random access preamble.

In a possible implementation, the method further includes: The first network device receives request information from the fourth network device, where the request information is used to request the information about the TA of the first candidate cell.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

According to a fifth aspect, a communication method is provided, including: A first network device receives a contention-free random access preamble of a first candidate cell, where the contention-free random access preamble is used to determine information about a TA of the first candidate cell; and the first network device sends the information about the TA of the first candidate cell to a third network device by using a second network device.

In a possible implementation, the method further includes: The first network device receives request information from the second network device, where the request information is used to request to obtain the information about the TA of the first candidate cell.

In a possible implementation, the information about the TA of the first candidate cell includes at least one of the following: a TA of a second candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

According to a sixth aspect, a communication apparatus is provided, including: a processing unit, configured to determine information about a TA of a first candidate cell; and a transceiver unit, configured to report the information about the TA of the first candidate cell to a first network device.

In a possible implementation, the transceiver unit is further configured to receive indication information, where the indication information indicates to report information about a TA of a candidate cell, and the candidate cell includes the first candidate cell.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

In a possible implementation, the transceiver unit is further configured to receive the indication information and an identifier of a target cell of a switch that are from a second network device, where the target cell is a second candidate cell, and the second candidate cell belongs to the first network device; or the transceiver unit is further configured to receive the indication information from the first network device.

In a possible implementation, the second candidate cell is different from the first candidate cell.

In a possible implementation, the indication information indicates to report the information about the TA of the first candidate cell.

In a possible implementation, the first candidate cell does not belong to the communication apparatus.

According to a seventh aspect, a communication apparatus is provided, including: a transceiver unit, configured to receive information about a TA of a first candidate cell, where the first candidate cell does not belong to the communication apparatus. The transceiver unit is further configured to send an identifier of a target cell of a switch and first indication information to a terminal device, where the first indication information indicates to access the target cell in a random access channel-skip manner, and the target cell is the first candidate cell.

In a possible implementation, the transceiver unit is further configured to receive the information about the TA of the first candidate cell from the terminal device; or the transceiver unit is further configured to receive the information about the TA of the first candidate cell from a second network device.

In a possible implementation, the transceiver unit is further configured to send second indication information to the terminal device, where the second indication information indicates to report information about a TA of a candidate cell; or the second indication information indicates to report the information about the TA of the first candidate cell.

In a possible implementation, the transceiver unit is further configured to send request information to the second network device, where the request information is used to request the information about the TA of the first candidate cell.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

According to an eighth aspect, a communication apparatus is provided, including a transceiver unit, configured to send first indication information to a terminal device, where the first indication information indicates the terminal device to obtain information about a TA of a first candidate cell. The transceiver unit is further configured to send an identifier of a target cell of a switch and second indication information to the terminal device, where the target cell is a second candidate cell, the second candidate cell belongs to a second network device, the second indication information indicates to report the information about the TA of the first candidate cell to the second network device, and the first candidate cell does not belong to the second network device.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

In a possible implementation, the second candidate cell is different from the first candidate cell.

According to a ninth aspect, a communication apparatus is provided, including: a processing unit, configured to obtain information about a timing advance TA of a first candidate cell, where the first candidate cell belongs to a first network device or a third network device, and the information about the TA of the first candidate cell is used to determine to use a random access channel-skip manner; and a transceiver unit, configured to send the information about the TA of the first candidate cell to a second network device by using a fourth network device.

In a possible implementation, the transceiver unit is further configured to receive the information about the TA of the first candidate cell from the fourth network device; or the transceiver unit is further configured to receive a contention-free random access preamble sent by a terminal device in the first candidate cell; and the processing unit is further configured to determine the information about the TA of the first candidate cell based on the contention-free random access preamble.

In a possible implementation, the method further includes: The first network device receives request information from the fourth network device, where the request information is used to request the information about the TA of the first candidate cell.

In a possible implementation, the information about the TA of the first candidate cell includes at least one of the following: the TA of the first candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

According to a tenth aspect, a communication apparatus is provided, including: a transceiver unit, configured to receive a contention-free random access preamble of a first candidate cell, where the contention-free random access preamble is used to determine information about a TA of the first candidate cell. The transceiver unit is configured to send the information about the TA of the first candidate cell to a third network device by using a second network device.

In a possible implementation, the transceiver unit is further configured to receive request information from the second network device, where the request information is used to request to obtain the information about the TA of the first candidate cell.

In a possible implementation, the information about the TA of the first candidate cell includes at least one of the following: a TA of a second candidate cell; or indication information indicating that the TA of the first candidate cell is valid; or remaining valid time of the TA of the first candidate cell; or a time offset of the TA of the first candidate cell, where the time offset corresponds to duration of the TA of the first candidate cell.

According to an eleventh aspect, a communication apparatus is provided, including a processor. The processor is configured to enable, by executing a computer program or instructions or by using a logic circuit, the communication apparatus to perform the method according to any one of the first aspect and the possible implementations of the first aspect, the communication apparatus to perform the method according to any one of the second aspect and the possible implementations of the second aspect, the communication apparatus to perform the method according to any one of the third aspect and the possible implementations of the third aspect, the communication apparatus to perform the method according to any one of the fourth aspect and the possible implementations of the fourth aspect, or the communication apparatus to perform the method according to any one of the fifth aspect and the possible implementations of the fifth aspect.

In a possible implementation, the communication apparatus further includes a memory, configured to store the computer program or the instructions.

In a possible implementation, the communication apparatus further includes a communication interface, configured to input and/or output a signal.

According to a twelfth aspect, a communication apparatus is provided, including a logic circuit and an input/output interface. The input/output interface is configured to input and/or output a signal. The logic circuit is configured to perform the method according to any one of the first aspect and the possible implementations of the first aspect. Alternatively, the logic circuit is configured to perform the method according to any one of the second aspect and the possible implementations of the second aspect. Alternatively, the logic circuit is configured to perform the method according to any one of the third aspect and the possible implementations of the third aspect. Alternatively, the logic circuit is configured to perform the method according to any one of the fourth aspect and the possible implementations of the fourth aspect. Alternatively, the logic circuit is configured to perform the method according to any one of the fifth aspect and the possible implementations of the fifth aspect.

According to a thirteenth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed.

According to a fourteenth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed.

According to a fifteenth aspect, a chip is provided, including a logic circuit. The logic circuit is configured to perform the method according to any one of the first aspect and the possible implementations of the first aspect. Alternatively, the logic circuit is configured to perform the method according to any one of the second aspect and the possible implementations of the second aspect. Alternatively, the logic circuit is configured to perform the method according to any one of the third aspect and the possible implementations of the third aspect. Alternatively, the logic circuit is configured to perform the method according to any one of the fourth aspect and the possible implementations of the fourth aspect. Alternatively, the logic circuit is configured to perform the method according to any one of the fifth aspect and the possible implementations of the fifth aspect.

For descriptions of beneficial effect of the fourth aspect to the fifteenth aspect, refer to the descriptions of the beneficial effect of the first aspect to the third aspect. Details are not described herein again.

### BRIEF DESCRIPTION OF DRAWINGS

FIG. 1 is a diagram of a communication system 100 to which an embodiment of this application is applicable;
FIG. 2 is a diagram of an application scenario 200 according to an embodiment of this application;
FIG. 3 is a diagram of a cell switch procedure;
FIG. 4 is a schematic interaction flowchart of a communication method 400 according to an embodiment of this application;
FIG. 5 is a schematic interaction flowchart of a communication method 500 according to an embodiment of this application;
FIG. 6A and FIG. 6B are a schematic interaction flowchart of a communication method 600 according to an embodiment of this application;
FIG. 7A and FIG. 7B are a schematic interaction flowchart of a communication method 700 according to an embodiment of this application;
FIG. 8A and FIG. 8B are a schematic interaction flowchart of a communication method 800 according to an embodiment of this application;
FIG. 9 is a diagram of a structure of a communication apparatus 900 according to an embodiment of this application;
FIG. 10 is a diagram of a structure of a communication apparatus 1000 according to an embodiment of this application;
FIG. 11 is a diagram of a structure of a communication apparatus 1100 according to an embodiment of this application;
FIG. 12 is a diagram of a structure of a communication apparatus 1200 according to an embodiment of this application; and
FIG. 13 is a diagram of a structure of a communication apparatus 1300 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) or new radio (new radio, NR) system, an evolved system after 5G like a 6th generation (6th generation, 6G) system, and non-terrestrial network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an unmanned aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multi-point transmission may be performed between macro base stations, between micro base stations, and between a macro base station and a micro base station. The technical solutions are applicable to the FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, and communication in the internet of vehicles, communication in the internet of things, communication in the industrial internet, and the like.

The technical solutions in embodiments of this application may also be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application may also use a macro-micro scenario including different forms of base stations in a communication network. For example, the base station may be a satellite, an air balloon station, or an uncrewed aerial vehicle station. The technical solutions in embodiments of this application are also applicable to a scenario in which both a wide-coverage base station and a small-coverage base station exist.

The technical solutions in embodiments of this application may be applied to a scenario in which there is a high-reliability service requirement, for example, a port, industrial manufacturing, transportation, and a coal mine.

It may be further understood that, the technical solutions in embodiments of this application may be further applied to a 5.5G wireless communication system, a 6G wireless communication system, and a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device with a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device with a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be a terminal device, or may be an apparatus that can support the terminal device in implementing the function, for example, a chip system. The apparatus may be installed in the terminal device or used in combination with the terminal device. In embodiments of this application, the chip system may include a chip, or may include a chip and another discrete component.

The network device in embodiments of this application is a device with a wireless transceiver function, and is configured to communicate with the terminal device. An access network device may be a node in a radio access network (radio access network, RAN), and may also be referred to as a base station, or may be referred to as a RAN node. The access network device may be an evolved NodeB (evolved NodeB, eNB or eNodeB) in LTE, a base station in a 5G network, for example, a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), or a cloud access network (cloud radio access network, C-RAN).

The network device in embodiments of this application may further include various forms of base stations, for example, a macro base station, a micro base station (also referred to as a small cell), a relay station, a transmission reception point (transmitting and receiving point, TRP), a transmission point (transmitting point, TP), a mobile switching center, a device that performs a base station function in device-to-device (device-to-device, D2D), vehicle-to-everything (vehicle-everything, V2X), and machine-to-machine (machine-to-machine, M2M) communication, a network device in an NTN communication system, and the like. This is not specifically limited in embodiments of this application.

The network device in embodiments of this application may alternatively include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be implemented by both a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device with a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used in combination with the network device. In embodiments of this application, the chip system may include a chip, or may include a chip and another discrete component.

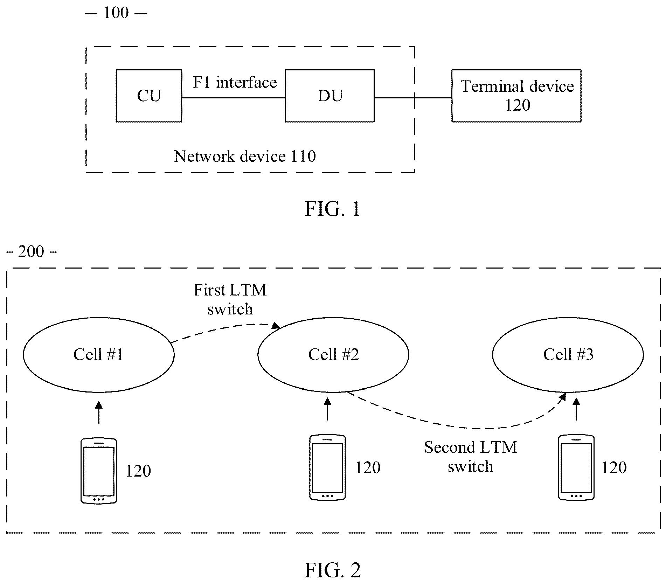

FIG. 1 is a diagram of a communication system 100 to which an embodiment of this application is applicable. As shown in FIG. 1, the communication system 100 includes a network device 110 and a terminal device 120. A quantity of terminal devices 120 and a quantity of network devices 110 in the communication system 100 are not limited in this application. It should be understood that FIG. 1 is merely an example for understanding, and cannot limit the protection scope claimed in this application.

It may be understood that the terminal device 120 may be any of the terminal devices listed above, and the network device 110 may be any one of the network devices listed above. This is not limited.

Specifically, the network device 110 may use a central unit (central unit, CU)-DU architecture, or may not use a CU-DU architecture. This is not limited. For ease of description, this application is described by using an example in which the network device 110 uses the CU-DU architecture. The network device 110 includes one CU and at least one DU, and the at least one DU communicates with each other by using the CU.

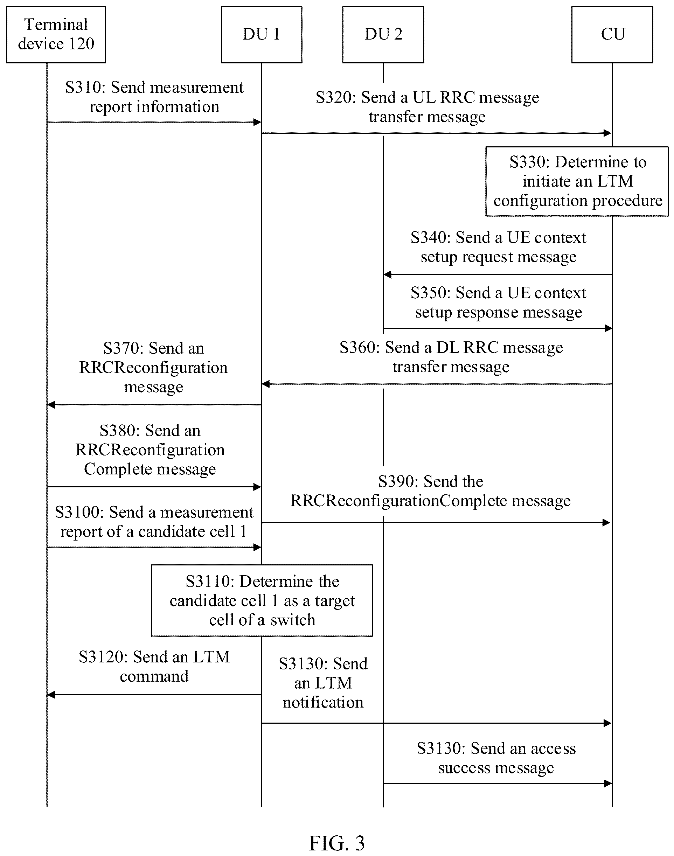

In the communication system 100, the DU of the network device 110 may perform a cell switch decision. For details, refer to FIG. 3.

FIG. 2 is a diagram of an application scenario 200 according to an embodiment of this application. As shown in FIG. 2, the application scenario 200 includes a cell #1 to a cell #3. A terminal device 120 is located in the cell #1, and the cell #1 is a serving cell of the terminal device 120. The terminal device receives an RRC reconfiguration message from the cell #1, where the RRC reconfiguration message includes candidate cell configurations of LTM of the cell #2 and the cell #3. The cell #2 and the cell #3 are candidate cells, and the candidate cells are potential target cells of a switch. The terminal device performs the following first switch and second switch based on the same RRC reconfiguration message.

Simply speaking, before the first switch, the cell #1 is the serving cell (namely, a source serving cell), and the cell #2 and the cell 3 are the candidate cells. After the first L1/L2 triggered mobility (L1/L2 triggered mobility, LTM) switch, the serving cell of the terminal device 120 is switched from the cell #1 to the cell #2. The cell #2 becomes a serving cell of the terminal device 120 after the first switch and is also a serving cell before the second switch. The cell #1 becomes a candidate cell of the second switch, and the cell #3 is still a candidate cell. After the second LTM switch, the terminal device 120 is switched from the cell #2 to the cell #3. The cell #3 becomes a serving cell of the terminal device 120 after the second LTM switch. The cell #2 becomes a candidate cell of a third LTM switch, and the cell #1 is still a candidate cell. In other words, each of the cell #1 to the cell #3 may become a serving cell after a switch is completed. For ease of differentiation and description, in this application, the cell #1 is defined as the source serving cell (further explanation is provided below), the cell #2 is defined as a candidate cell that serves as a target cell of the first switch (the terminal device 120 is switched from the cell #1 to the cell #2), and the cell #3 is a candidate cell that does not serve as the target cell of the first switch.

In the application scenario 200, a network device 110 may be a base station. If the network device 110 uses a CU-DU split architecture, the network device 110 includes one CU and at least one DU. The cell #1 to the cell #3 belong to different DUs under the same CU, and all the DUs may belong to the network device 110. In this way, the application scenario 200 may be applied to interaction between base stations. In the application scenario 200, the cell #1 to the cell #3 may belong to different DUs under different CUs. For example, the cell #1 belongs to a DU 1 under a CU 1, and the cell 2 and the cell #3 belong to a DU 2 under a CU 2, where the CU 1 and the CU 2 are different. In this way, the application scenario 200 may be applied to interaction between base stations.

In conclusion, the application scenario 200 may be applied to interaction between base stations and interaction inside the base station. For ease of description, it is defined in embodiments of this application that one cell corresponds to one device (referred to as a "network device" below), and the device is a DU. For ease of differentiation, a network device 100 to a network device 400 are defined in embodiments of this application. The network device 100 (corresponding to the cell #1), the network device 300 (corresponding to the cell #2), and the network device 400 (corresponding to the cell #3) may all be DUs, and the network device 200 is a CU. This is further described below.

It should be noted that the technical solutions disclosed in this application may be applied to interaction between base stations (for example, inter-gNB), or may be applied to interaction inside the base station (for example, intra-gNB). For ease of description, interaction inside the base station is mainly used as an example for description in this application. However, related descriptions may be applied to a scenario of interaction between base stations. For example, the network device 100 and the network device 200 belong to a base station 1, and the network device 300 belongs to a base station 2. Unified descriptions are provided herein. Details are not described below again.

FIG. 3 is a diagram of a cell switch procedure. The procedure shown in FIG. 3 may be applied to a scenario in which a DU 1 and a DU 2 belong to a same CU. In addition, the procedure shown in FIG. 3 may also be applied to a scenario in which the DU 1 and the DU 2 respectively belong to different CUs, and procedures of the two scenarios are similar. For ease of description, in this embodiment of this application, an example in which the cell switch procedure is applied to the scenario in which the DU 1 and the DU 2 belong to the same CU is used for description. As shown in FIG. 3, the cell switch procedure includes the following steps.

S310: A terminal device 120 sends measurement report information to the DU 1.

Correspondingly, the DU 1 receives the measurement report information. The measurement report information includes measurement results of a plurality of neighboring cells.

Optionally, the measurement report information is an L3 measurement result. The L3 measurement result includes the measurement results of the plurality of neighboring cells on which the terminal device 120 performs L3 smoothing processing.

S320: The DU 1 sends an uplink radio resource control message transfer (uplink radio resource control message transfer, UL RRC MESSAGE TRANSFER) message to the CU.

Correspondingly, the CU receives the UL RRC message transfer message. The UL RRC message transfer message includes the measurement report information in S310.

S330: The CU determines to initiate an LTM configuration procedure.

Specifically, the CU determines, based on the measurement report information, that LTM configuration procedures need to be initiated for some or all of the plurality of neighboring cells in S310. In other words, the CU determines LTM candidate cells (which may include the cell #1 to the cell #3 in FIG. 2) based on the measurement report information, so that the terminal device 120 performs an LTM switch in the LTM candidate cells.

S340: The CU sends a UE context setup request message (UE CONTEXT SETUP REQUEST MESSAGE) to the DU 2.

Specifically, the UE context setup request message includes an identifier of at least one candidate cell. The at least one candidate cell includes a candidate cell 1 described below. For example, the at least one candidate cell includes the cell #1 to the cell #3 in FIG. 2. The candidate cell 1 may be the cell #2 or the cell #3.

Optionally, the at least one candidate cell belongs to the plurality of neighboring cells. The UE context setup request message is used to request the DU 2 to provide LTM configuration information for the at least one candidate cell, so that the terminal device 120 can perform the LTM switch based on the LTM configuration information.

S350: The DU 2 sends a UE context setup response message (UE CONTEXT SETUP RESPONSE MESSAGE) to the CU.

Specifically, if the DU 2 accepts an LTM configuration request, the DU 2 determines to respond to the UE context setup request message. The UE context setup response message includes lower-layer configuration information (for example, radio link control (radio link control, RLC) configuration information, media access control information (media access control, MAC) configuration information, and physical layer (physical layer, PHY) configuration information) of the at least one candidate cell. The information can be used by the terminal device 120 to perform the LTM switch and data transmission after the LTM switch is completed.

S360: The CU sends a downlink (downlink, DL) RRC message transfer (DL RRC MESSAGE TRANSFER) message to the DU 1.

Correspondingly, the DU 1 receives the DL RRC message transfer message. The DL RRC message transfer message includes an RRC reconfiguration (RRCReconfiguration) message, and the RRCReconfiguration message includes the lower-layer configuration information of the at least one candidate cell.

S370: The DU 1 sends the RRCReconfiguration message to the terminal device 120.

Correspondingly, the terminal device 120 receives the RRCReconfiguration message.

It may be understood that a cell that receives the RRCReconfiguration message is a source serving cell, namely, the cell #1.

Specifically, the RRCReconfiguration message includes the LTM configuration information provided by the DU 2 for the at least one candidate cell. In other words, the terminal device 120 can perform the LTM switch based on the RRCReconfiguration message.

Optionally, the RRCReconfiguration message may further include random access common configuration information of each of the at least one candidate cell. The random access common configuration information is used by the terminal device 120 to send a contention-free random access preamble in the corresponding candidate cell, and the contention-free random access preamble is used to determine a TA of the candidate cell.

It should be noted that the RRCReconfiguration message may be used for an initial LTM switch (a first LTM switch), and may also be used for a plurality of subsequent switches (for example, a second LTM switch), and no additional RRCReconfiguration message is required. Unified descriptions are provided herein. Details are not described below again. S380: The terminal device 120 sends an RRCReconfigurationComplete message to the DU 1.

Correspondingly, the DU 1 receives the RRCReconfigurationComplete message.

S390: The DU 1 sends the RRCReconfigurationComplete message to the CU.

Correspondingly, the CU receives the RRCReconfigurationComplete message.

S3100: The terminal device 120 sends a measurement result of the candidate cell 1 to the DU 1.

Correspondingly, the DU 1 receives the measurement result of the candidate cell 1.

Before or after S3100, the DU 1 may send a plurality of physical downlink control channel (physical downlink control channel, PDCCH) orders (order) to the terminal device 120. The plurality of PDCCH orders are used to indicate or trigger the terminal device 120 to send contention-free random access preambles in all of the plurality of candidate cells, to obtain TAs of the candidate cells. The PDCCH order includes contention-free random access configuration information of the candidate cell, and the contention-free random access configuration information is used to transmit the contention-free random access preamble. The terminal device 120 sends the contention-free access preambles to all of the at least one candidate cell, to obtain a TA of the candidate cell.

It may be understood that one PDCCH order corresponds to contention-free random access of one candidate cell. The DU 1 sends the plurality of PDCCH orders to the terminal device 120, to trigger the terminal device 120 to initiate random access procedures for the plurality of candidate cells.

Optionally, the terminal device 120 also receives a random access response (random access response, RAR) message from the DU 1 or the DU 2, where the RAR message includes the TA of the candidate cell.

S3110: The DU 1 determines the candidate cell 1 as a target cell of a switch.

Specifically, the DU 1 determines, based on the measurement report of the candidate cell 1, that channel quality of the candidate cell 1 is better than channel quality of a serving cell, and further determines that the serving cell of the terminal device 120 is switched to the candidate cell 1.

S3120: The DU 1 sends an LTM command message to the terminal device 120.

Correspondingly, the terminal device 120 receives the LTM command. The LTM command message includes an identifier of the target cell. The terminal device 120 is switched (switch) to the target cell based on the LTM command. The target cell is the candidate cell 1 (for example, the cell #2).

S3130: The DU 1 sends an LTM notification to the CU.

Specifically, the CU determines the target cell of the LTM switch based on the LTM notification. The LTM notification includes the identifier of the target cell, for example, an identifier of the candidate cell 1.

Further, the CU may send downlink data to the DU 2 corresponding to the target cell.

S3140: The DU 2 sends an access success (ACCESS SUCCESS) message to the CU.

Correspondingly, the CU receives the access success message from the DU 2, where the access success message includes the identifier of the target cell, and indicates, to the CU, that the terminal device 120 has successfully accessed the target cell.

Specifically, the terminal device 120 may access the target cell in a random access manner, for example, through a random access channel, or may access the target cell in a random access channel-less or random access channel-skip manner, for example, directly access the target cell through a physical uplink shared channel (physical uplink shared channel, PUSCH) or a physical uplink control channel (physical uplink control channel, PUCCH), with no need to send a random access preamble. The PUSCH or the PUCCH needs to carry indication information a, and the indication information a indicates, to the DU 2, that the terminal device 120 successfully accesses the candidate cell 1.

It may be understood that, after the DU 2 determines that the terminal device 120 successfully accesses the target cell, the DU 2 sends the access success message including the identifier of the target cell to the CU. Further, the CU can determine, based on the identifier of the target cell carried in the access success message, that the terminal device 120 is successfully switched to the target cell.

After completing the cell switch, the terminal device 120 performs data communication with the DU corresponding to the target cell. For ease of description, this application is described by using an example in which the target cell is the cell #2. The cell #1 corresponds to a source DU, the cell #2 corresponds to a target DU, and the cell #3 corresponds to another candidate DU. Frequent movement of the terminal device 120 may quickly trigger a plurality of subsequent cell switches in the plurality of candidate cells. For example, the serving cell of the terminal device 120 is switched from the cell #2 to the cell #3. Because the target DU does not have information about a TA of the cell #3 (which is the information about the TA of the cell #3 of the terminal device 120), or the target DU does not know whether the terminal device 120 has the information about the TA of the cell #3, the target DU indicates the terminal device 120 to initiate a random access procedure for the cell #3, to obtain the TA of the cell #3. As a result, the terminal device 120 needs to continue to initiate the random access procedure for the cell #3, resulting in high power consumption and high random access interference of the terminal device 120.

In view of this, this application provides a communication method and a communication apparatus, to reduce a quantity of random access procedures initiated by a terminal device.

The following describes the communication method and the communication apparatus in embodiments of this application with reference to accompanying drawings.

It should be noted that a method 400 and a method 500 are respectively described from two dimensions: a candidate DU and the terminal device. However, the method 400 and the method 500 are related at a technical solution level, or are respectively described from different device perspectives based on a same technical problem.

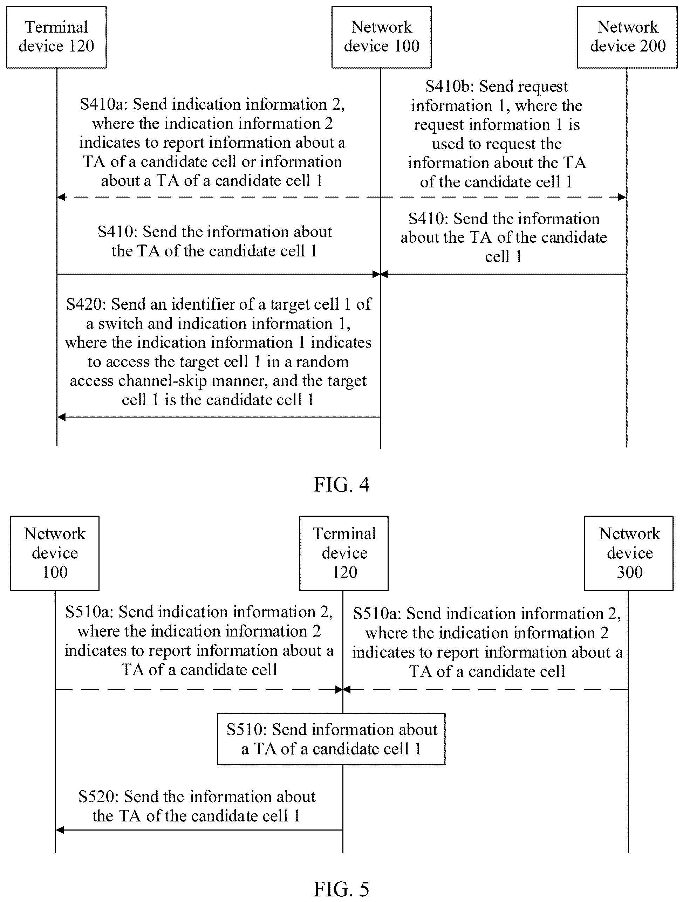

FIG. 4 is a schematic interaction flowchart of a communication method 400 according to an embodiment of this application. The method 400 may be performed by a network device 100, a network device 200, and a terminal device 120, or may be performed by modules and/or components (for example, chips or integrated circuits) that are installed in the network device 100, the network device 200, and the terminal device 120 and that have corresponding functions. This is not limited. The following uses an example in which the method 400 is performed by the network device 100, the network device 200, and the terminal device 120 for description.

For the network device 100 and the network device 200, refer to the descriptions in FIG. 2. Details are not described again. The method 400 includes the following steps.

S410: The network device 100 receives information about a TA of a candidate cell 1.

Specifically, the network device 100 receives the information about the TA of the candidate cell 1 from the terminal device 120. The candidate cell 1 does not belong to the network device 100, and the candidate cell 1 belongs to a network device 300 or a network device 400. When the network device 100 receives the information about the TA of the candidate cell 1 from the terminal device 120, the information about the TA of the candidate cell 1 is information about a TA of the terminal device 120. For example, the terminal device 120 can perform, based on the TA of the candidate cell 1, data transmission with the network device 300 or the network device 400 corresponding to the candidate cell 1.

It should be noted that the candidate cell 1 may be a cell #1 or a cell #3.

In a possible implementation, the network device 100 is a candidate DU, and serves as a target DU of a first switch (the target DU is a DU corresponding to a cell #2), the network device 200 is a CU, the network device 300 is a source DU of the first switch (the source DU is a DU corresponding to the cell #1), and the network device 400 is another candidate DU that does not serve as the target DU of the first switch (the another candidate DU is a DU corresponding to the cell #3). For ease of understanding, the following uses an example in which the network device 100 is the target DU, the network device 300 is the source DU, the network device 200 is the CU, and the network device 400 is the another candidate DU for description. The definition is also applicable to the following method 500.

For a case in which the network device 100 receives the information about the TA of the candidate cell 1:
In a first possible implementation, when the network device 100 (the target DU) receives the information about the TA of the candidate cell 1 from the terminal device 120, the network device 100 (the target DU) may send, to the terminal device 120, information indicating to report a TA of a candidate cell. Correspondingly, the terminal device 120 determines to report the information about the TA of the candidate cell 1 from a plurality of candidate cells, and reports the information about the TA of the candidate cell 1 to the network device 100 (the target DU). The plurality of candidate cells include the candidate cell 1.

Optionally, the network device 100 (the target DU) may send, to the terminal device 120, information indicating to report the TA of the candidate cell 1. The terminal device 120 reports the information about the TA of the candidate cell 1 to the network device 100 (the target DU) based on the indication.

In a second possible implementation, when the network device 100 (the target DU) receives the information about the TA of the candidate cell 1 from the terminal device 120, the network device 100 (the target DU) may send, to the terminal device 120, information indicating to report the TA of the candidate cell 1. Correspondingly, the terminal device 120 reports the information about the TA of the candidate cell 1 to the network device 100 (the target DU).

In a third possible implementation, the network device 100 (the target DU) receives the information about the TA of the candidate cell 1 from the network device 200 (the CU), where the candidate cell 1 belongs to the network device 300 (the source DU) or the network device 400 (the another candidate DU). In an example, when the candidate cell 1 belongs to the network device 300 (the source DU), the network device 300 (the source DU) sends the information about the TA of the candidate cell 1 to the network device 200 (the CU), and then, the network device 200 (the CU) sends the information about the TA of the candidate cell 1 to the network device 100 (the target DU). In another example, when the candidate cell 1 belongs to the network device 400 (the another candidate DU), the network device 400 (the another candidate DU) sends the information about the TA of the candidate cell 1 to the network device 200 (the CU), and then, the network device 200 (the CU) sends the information about the TA of the candidate cell 1 to the network device 100 (the target DU).

In a fourth possible implementation, when the candidate cell 1 belongs to the network device 400 (the another candidate DU), the network device 400 (the another candidate DU) sends the information about the TA of the candidate cell 1 to the network device 300 (the source DU) by using the network device 200 (the CU). Correspondingly, the network device 300 (the source DU) sends the information about the TA of the candidate cell 1 to the network device 100 (the target DU) by using the network device 200 (the CU).

S420: The network device 100 sends an identifier of a target cell 1 of a switch and indication information 1 to the terminal device 120, where the indication information 1 indicates to access the target cell 1 in a random access channel-skip manner, and the target cell 1 is the candidate cell 1.

Specifically, the identifier of the target cell 1 and the indication information 1 may be carried in an LTM command (LTM command) message. To be specific, the network device 100 (the target DU) sends the LTM command message to the terminal device 120, where the LTM command message includes the identifier of the target cell 1 and the indication information 1. The LTM command message may be a MAC control element (control element, CE).

Optionally, the identifier of the target cell 1 and the indication information 1 may be carried in different messages.

Optionally, the network device 100 (the target DU) may separately send the identifier of the target cell 1 and the indication information 1. For example, the network device 100 sends an LTM command message to the terminal device 120, where the LTM command message includes the identifier of the target cell 1. Further, the network device 100 (the target DU) sends the indication information 1 to the terminal device 120.

In a possible implementation, when the network device 100 (the target DU) sends the LTM command message including the identifier of the target cell of the switch to the terminal device 120, the following may be predefined: When the LTM command message excludes indication information indicating to initiate a contention-free random access procedure for the target cell, it is considered by default that the terminal device 120 accesses the target cell in the random access channel-skip manner.

In a possible implementation, when the LTM command message sent by the network device 100 (the target DU) to the terminal device 120 includes an indication field (which may be a newly added field) indicating to access the target cell in the random access channel-skip (random access channel-skip/less, RACH-SKIP/LESS) manner, the terminal device 120 performs an operation based on the indication field.

Optionally, the indication information 1 may further indicate the terminal device 120 to access the target cell 1 in a random access channel-less manner.

It may be understood that, that the network device 100 (the target DU) receives the information about the TA of the candidate cell 1 indicates that the network device 100 (the target DU) determines that the terminal device 120 and/or the network device (the network device 300 or the network device 400) corresponding to the candidate cell 1 have/has the TA of the candidate cell 1. Therefore, the network device 100 (the target DU) determines, based on the received information about the TA of the candidate cell 1, to send the indication information 1 to the terminal device 120. In a possible implementation, the indication message 1 may be a TA of the target cell (the terminal device 120 does not store the TA of the target cell) or a random access channel-skip indication (the terminal device 120 stores the TA of the target cell). The terminal device 120 may determine the TA of the target cell based on received information about the TA of the target cell, and does not need to obtain the TA of the target cell by initiating a random access procedure. Therefore, the terminal device 120 may access the target cell in the random access channel-skip manner.

Optionally, after receiving the information about the TA of the candidate cell 1, the network device 100 (the target DU) determines that the terminal device 120 and/or the network device corresponding to the candidate cell 1 already have/has the information about the TA of the candidate cell 1. After the network device 100 (the target DU) sends the LTM command message to the terminal device 120, the terminal device 120 does not need to be triggered to initiate the contention-free random access procedure for the target cell (that is, the candidate cell 1 serves as the target cell), to obtain the TA of the candidate cell 1 again.

Optionally, the network device 100 (the target DU) may further receive information about a TA of a candidate cell 2. Correspondingly, the network device 100 (the target DU) does not need to trigger, based on the obtained information about the TA of the candidate cell 2, the terminal device 120 to initiate a contention-free random access procedure for the candidate cell 2 before the switch, to obtain the TA of the candidate cell 2 again. Therefore, a quantity of random access procedures that need to be initiated by the terminal device 120 can be reduced. For a manner in which the network device 100 (the target DU) obtains the information about the TA of the candidate cell 2, refer to the foregoing manner of obtaining the information about the TA of the candidate cell 1.

Optionally, the network device 100 (the target DU) may simultaneously obtain the information about the TA of the candidate cell 1 and the information about the TA of the candidate cell 2.

In conclusion, the network device 100 (the target DU) may determine, based on the obtained information about the TA of the candidate cell, that the terminal device 120 does not need to be triggered to initiate a random access procedure for the candidate cell in which the network device 100 has obtained the information about the TA, to obtain the TA of the candidate cell. This can effectively reduce the quantity of random access procedures that need to be initiated by the terminal device 120. Therefore, power consumption and random access interference of the terminal device 120 can be reduced.

In a possible implementation, that the indication information 1 indicates the terminal device 120 to access the target cell 1 in the random access channel-skip manner may include: The indication information 1 indicates the terminal device 120 to perform data transmission in the target cell 1 in the random access channel-skip manner. In other words, after receiving the LTM command message, the terminal device 120 does not need to initiate a random access procedure for the candidate cell 1.

In a possible implementation, a function that the indication information 1 indicates to access the target cell 1 in the random access channel-skip manner may be completed via the indication information 1 or a specific information element in the indication information 1. This is not limited.

In a possible implementation, the candidate cell 1 may be a source serving cell (for example, the cell #1) before an initial LTM switch (which is a first LTM switch) of the terminal device 120, or may be a candidate cell (for example, the cell #3) different from the source serving cell before the initial LTM switch. For example, after the initial LTM switch is performed, the terminal device 120 is switched from the cell #1 (which is the source serving cell) to the cell #2 (which is the target cell). When the network device 100 (the target DU) determines that the terminal device 120 needs to be switched from the cell #2 to the cell #3 or the cell #1 (the cell #3 or the cell #1 may be the candidate cell 1), because the network device 100 (the target DU) has obtained information about a TA of the cell #3 or the cell #1, the network device 100 (the target DU) may send the indication information 1 to the terminal device 120.

In a possible implementation, the network device 100 (the target DU) receives the information about the TA of the candidate cell 1 from the terminal device 120, and the method 400 may further include the following step.

S410a: The network device 100 (the target DU) sends indication information 2 to the terminal device 120, where the indication information 2 indicates (or is used to trigger) to report the information about the TA of the candidate cell or the information about the TA of the candidate cell 1.

Specifically, when the indication information 2 indicates (or is used to trigger) to report the information about the TA of the candidate cell, the terminal device 120 may report information about TAs of the plurality of candidate cells to the network device 100 (the target DU), where the plurality of candidate cells include the candidate cell 1. When the indication information 2 indicates (or is used to trigger) to report the information about the TA of the candidate cell 1, the terminal device 120 reports the information about the TA of the candidate cell 1 to the network device 100 (the target DU).

Optionally, when the indication information 2 indicates (or is used to trigger) to report the information about the TA of the candidate cell 1, the indication information 2 includes identification information of the candidate cell 1. The terminal device 120 determines, based on the identification information of the candidate cell 1 carried in the indication information 2, to report the information about the TA of the candidate cell 1 to the network device 100 (the target DU).

Optionally, when the indication information 2 indicates (or is used to trigger) to report the information about the TA of the candidate cell, the indication information 2 may not carry an identifier of the candidate cell, and the terminal device 120 determines, from the plurality of candidate cells, to report the information about the TA of the candidate cell 1 to the network device 100 (the target DU). It may be understood that, for a process in which the terminal device 120 determines the information about the TA of the candidate cell 1, refer to the descriptions in FIG. 3. Details are not described herein again.

In a possible implementation, the network device 100 (the target DU) receives the information about the TA of the candidate cell 1 from the network device 200 (the CU), and the method 400 may further include the following step.

S410b: The network device 100 sends request information 1 to the network device 200 (the CU), where the request information 1 is used to request the information about the TA of candidate cell 1 or the candidate cell.

Correspondingly, the network device 200 (the CU) receives the request information 1 from the network device 100 (the target DU), and sends the information about the TA of the candidate cell 1 to the network device 100 (the target DU) based on the request information 1.

Specifically, the network device 200 (the CU) interacts with a network device (for example, the network device 300 (the source DU) or the network device 4 (the another candidate DU)) that has the information about the TA of the candidate cell 1, to obtain the information about the TA of the candidate cell 1, and sends the information about the TA of the candidate cell 1 to the network device 1.

Specifically, when the network device 100 (the target DU) obtains the information about the TA of the candidate cell 1 from the network device 200 (the CU), the network device 100 (the target DU) sends, by using the network device 200 (the CU), the request information 1 to the network device (for example, the network device 300 or the network device 4) corresponding to the candidate cell 1. The request information 1 is used to request the information about the TA of the candidate cell 1, and includes an identifier of the candidate cell 1.

More specifically, for S410b, the network device 110 (the target DU) requests the network device 300 (the source DU) or the network device 400 (the another candidate DU) for the information about the TA of the candidate cell 1 by using the network device 200 (the CU).

Optionally, the request information 1 includes the identification information of the candidate cell 1. The network device 200 (the CU) determines, based on the identification information of the candidate cell 1 carried in the request information 1, to send the request information 1 to the network device 300 (the source DU) or the network device 4 (the another candidate DU) corresponding to the candidate cell 1.

Optionally, when the request information 1 excludes identification information of the candidate cell, the network device 200 (the CU) broadcasts the request information 1, and a network device that receives the request information 1 (for example, the network device 300 or the network device 4) responds to the request information 1, and sends, to the network device 100 (the target DU) by using the network device 200 (the CU), the information about the TA of the candidate cell that the network device already has.

Optionally, before switching the terminal device 120 to the candidate cell 1, the network device 100 (the target DU) may also obtain the information about the TA of the candidate cell 2, and may further determine not to trigger a random access procedure for the candidate cell 2. The candidate cell 2 is a candidate cell different from the candidate cell 1, and may belong to the network device 300 (the source DU), and may also belong to the network device 400 (the another candidate DU). For descriptions of obtaining the information about the TA of the candidate cell 2, refer to the descriptions of obtaining the information about the TA of the candidate cell 1. Details are not described again.

In a possible implementation, the information about the TA of the candidate cell 1 includes at least one of the following: the TA of the candidate cell 1; indication information indicating that the TA of the candidate cell 1 is valid; remaining valid time of the TA of the candidate cell 1; and a time offset of the TA of the candidate cell 1, where the time offset corresponds to duration of the TA of the candidate cell 1.

It may be understood that, when the information about the TA of the candidate cell 1 includes the TA of the candidate cell 1, the information about the TA of the candidate cell 1 is an absolute TA value of the candidate cell 1. The terminal device 120 may determine a TA for uplink transmission based on the absolute TA value of the candidate cell 1.

Specifically, when the information about the TA of the candidate cell 1 is the TA of the candidate cell 1, the network device 100 (the target DU) determines that the terminal device 120 and/or the network device (which is the network device 300 (the source DU) or the network device 4 (the another candidate DU)) corresponding to the candidate cell 1 have/has the TA of candidate cell 1. When the information about the TA of the candidate cell 1 is the indication information indicating that the TA of the candidate cell 1 is valid, the network device 1 determines that the TA of candidate cell 1 owned by the terminal device 120 and/or the network device (which is the network device 300 (the source DU) or the network device 4 (the another candidate DU)) corresponding to the candidate cell 1 is valid. When the information about the TA of the candidate cell 1 is the remaining valid time of the TA of the candidate cell 1, the network device 100 (the target DU) determines the remaining valid time of the TA of the candidate cell 1. If an LTM switch is performed within the remaining valid time, the network device 100 (the target DU) does not need to indicate the terminal device 120 to initiate the random access procedure for the candidate cell 1. If the LTM switch is performed beyond the remaining valid time, the network device 100 (the target DU) still needs to indicate the terminal device 120 to initiate the random access procedure for the candidate cell 1. When the information about the TA of the candidate cell 1 is the time offset (time offset) of the TA of the candidate cell 1, the network device 100 (the target DU) determines elapsed duration or duration of the TA of the candidate cell 1 based on the time offset. The network device 100 (the target DU) may determine, based on the time offset, time that elapses after the TA of the candidate cell 1 is determined. Correspondingly, the network device 100 (the target DU) determines, based on the time offset, whether the terminal device 120 needs to be indicated to initiate the random access procedure for the candidate cell 1.

Optionally, the TA of the candidate cell 1 includes a valid TA and an invalid TA.

Optionally, the network device 100 (the target DU) indicates, to the terminal device 120, to report the valid TA of the candidate cell 1. Correspondingly, the terminal device 120 reports the valid TA of the candidate cell 1 to the network device 100 (the target DU). Optionally, the terminal device 120 may simultaneously report the valid TA and the invalid TA of the candidate cell 1 to the network device 100 (the target DU). When the terminal device 120 reports the valid TA of the candidate cell 1 to the network device 100 (the target DU), the terminal device 120 may report remaining valid time, a time offset, or the like of the valid TA to the network device 100 (the target DU).

Optionally, when the network device 100 (the target DU) indicates the terminal device 120 to report the TA of the candidate cell 1, the terminal device 120 reports the valid TA of the candidate cell 1 to the network device 100 (the target DU). Optionally, the terminal device 120 may simultaneously report the valid TA and the invalid TA of the candidate cell 1 to the network device 100 (the target DU). Optionally, when the terminal device 120 reports the valid TA of the candidate cell 1 to the network device 100 (the target DU), the terminal device 120 may report the remaining valid time, the time offset, or the like of the valid TA to the network device 100 (the target DU).

It should be noted that the method 400 mainly involves interaction between the source DU, the terminal device 120, the target DU, the another candidate DU, and the CU. The method 400 is mainly described by using the target DU as a subject to obtain the information about the TA of the candidate cell 1 and send the indication information 1 to the terminal device 120. The following describes a technical solution in which the terminal device 120 is used as a subject with reference to another accompanying drawing.

It should be noted that the source DU, the target DU, the another candidate DU, and the CU in the method 400 may belong to a same base station. In addition, the method 400 may be further applied to a scenario of interaction between base stations. For example, the source DU and the CU belong to a base station 1, and the target DU and the another candidate DU belong to a base station 2. For a specific method, refer to the foregoing descriptions. Details are not described herein again.

FIG. 5 is a schematic interaction flowchart of a communication method 500 according to an embodiment of this application. The method 500 may be performed by a network device 100, a network device 300, and a terminal device 120, or may be performed by modules and/or components (for example, chips or integrated circuits) that are installed in the network device 100, the network device 300, and the terminal device 120 and that have corresponding functions. This is not limited in embodiments of this application. As shown in FIG. 5, the method 500 includes the following steps.

Optionally, in S510a, the terminal device 120 receives indication information 2, where the indication information 2 indicates to report information about a TA of a candidate cell.

Specifically, the terminal device 120 may receive the indication information 2 from the network device 100 (a target DU), or may receive the indication information 2 from the network device 300 (a source DU). The candidate cell includes a candidate cell 1. The candidate cell 1 does not belong to the network device 100 (the target DU), and the candidate cell 1 belongs to the network device 300 (the source DU) or a network device 4 (another candidate DU).

In an example, after the terminal device 120 is switched to a candidate cell 2 managed by the network device 100 (the target DU), the network device 100 (the target DU) sends the indication information 2 to the terminal device 120, where the indication information 2 indicates the terminal device 120 to report the information about the TA of the candidate cell.

In an example, when the network device 300 (the source DU) determines that the terminal device 120 needs to be switched to the candidate cell 2 managed by the network device 100 (the target DU), an LTM command sent by the network device 300 (the source DU) to the terminal device 120 includes the indication information 2 and an identifier of a target cell of a switch, where the target cell is the candidate cell 2 (this is an initial LTM switch). The terminal device 120 determines, based on the LTM command, that the information about the TA of the candidate cell needs to be reported to the network device 100 (the target DU). For descriptions of sending the indication information 2 by the network device 300 (the source DU) to the terminal device 120, refer to the foregoing descriptions. Details are not described herein again.

According to the foregoing technical solution, the terminal device 120 reports the information about the TA of the candidate cell based on an indication of the indication information 2. This helps improve efficiency of information exchange between the terminal device 120 and the network device.

S510: The terminal device 120 determines information about a TA of the candidate cell 1.

Specifically, the terminal device 120 sends a contention-free random access preamble in the candidate cell 1. Correspondingly, the network device 300 (the source DU) or the network device 400 (the another candidate DU) receives the contention-free random access preamble of the candidate cell 1, and further determines the TA of the candidate cell 1. Further, the network device 300 (the source DU) or the network device 400 (the another candidate DU) sends an RAR message to the terminal device 120, where the RAR message includes the TA of the candidate cell 1. In this way, the terminal device 120 may determine the TA of the candidate cell 1 according to the foregoing method.

Optionally, the terminal device 120 and/or a network device that has the information about the TA of the candidate cell 1 may determine information such as valid information, remaining valid time, or a time offset of the TA of the candidate cell 1.

S520: The terminal device 120 reports the information about the TA of the candidate cell 1 to the network device 100 (the target DU).

Specifically, when the indication information 2 indicates to report the information about the TA of the candidate cell, the terminal device 120 may report information about TAs of a plurality of candidate cells to the network device 100 (the target DU), where the plurality of candidate cells include the candidate cell 1. For descriptions of the candidate cell 1, refer to the method 300. Details are not described herein again.

Specifically, the terminal device 120 reports the information about the TA of the candidate cell 1 to the network device 100 (the target DU), so that the network device 100 (the target DU) obtains the information about the TA of the candidate cell 1. Correspondingly, the network device 100 (the target DU) may determine, based on the information about the TA of the candidate cell 1, whether the terminal device 120 needs to be triggered to initiate a random access procedure for the candidate cell 1. When the network device 100 (the target DU) determines that the terminal device 120 does not need to be triggered to initiate the random access procedure for the candidate cell 1, a quantity of random access procedures that need to be initiated by the terminal device can be effectively reduced.

Optionally, the network device 100 (the target DU) may further receive information about a TA of a candidate cell 3. The network device 100 (the target DU) does not need to trigger, based on the obtained information about the TA of the candidate cell 3, the terminal device 120 to initiate a random access procedure for the candidate cell 3. This can reduce the quantity of random access procedures that need to be initiated by the terminal device 120.

In conclusion, the network device 100 (the target DU) may determine, based on the obtained information about the TA of the candidate cell, that the terminal device 120 does not need to be triggered to initiate a random access procedure for the candidate cell in which the network device 100 (the target DU) has obtained the information about the TA. This can effectively reduce the quantity of random access procedures that need to be initiated by the terminal device 120. Therefore, power consumption and random access interference of the terminal device 120 can be reduced.

It should be noted that, for descriptions of the information about the TA of the candidate cell 1 in the method 500, refer to the method 400. Details are not described herein again.

It should be noted that the method 500 mainly involves interaction between the source DU, the terminal device 120, the target DU, and the another candidate DU. The method 500 is mainly described by using a subject in which the terminal device 120 determines and reports the information about the TA of the candidate cell 1.

It should be noted that the source DU, the target DU, the another candidate DU, and the CU in the method 500 may belong to a same base station. In addition, the method 500 may be further applied to a scenario of interaction between base stations. For example, the source DU and the CU belong to a base station 1, and the target DU and the another candidate DU belong to a base station 2. For a specific method, refer to the foregoing descriptions. Details are not described herein again.

It should be further noted that the method 500 may be a peer-side method of the method 400.

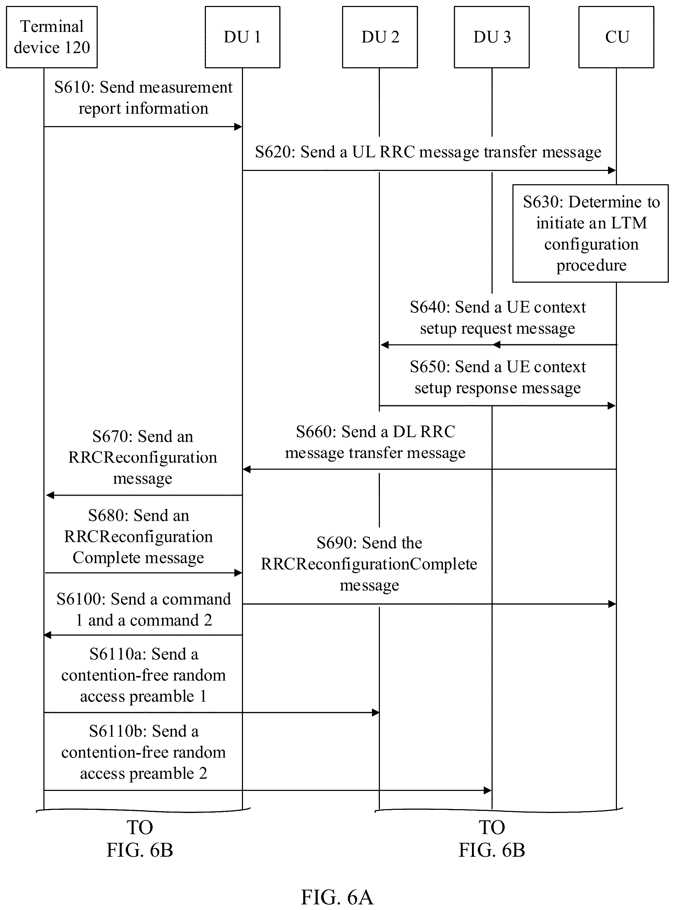

The method 400 and the method 500 are further described below with reference to FIG. 6A to FIG. 8B.

It should be noted that methods shown in FIG. 6A to FIG. 8B are further descriptions of the method 400 and the method 500. In addition, the methods shown in FIG. 6A to FIG. 8B may also be understood as supplementary descriptions of the method 400 and the method 500. A DU 1 is the network device 300, a DU 2 is the network device 100, a DU 3 is the network device 400, and a CU is the network device 200.

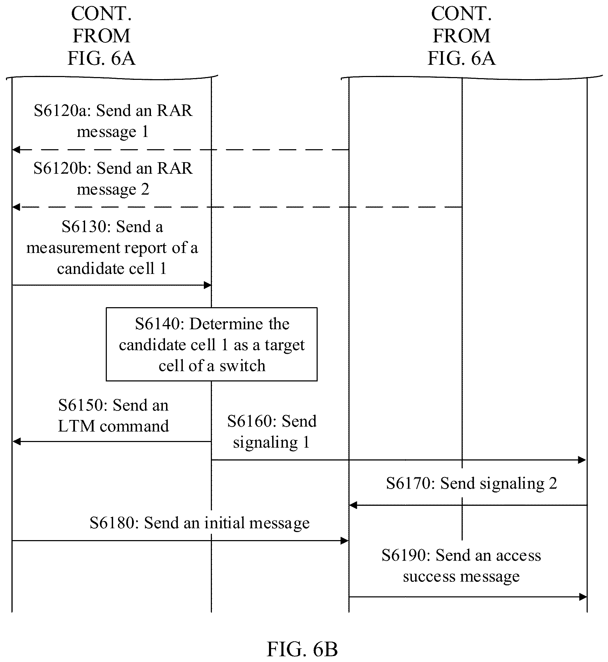

FIG. 6A and FIG. 6B are a schematic interaction flowchart of a communication method 600 according to an embodiment of this application. The method 600 may be performed by a terminal device 120, a DU 1, a DU 2, a DU 3, and a CU, or may be performed by modules and/or components (for example, chips or integrated circuits) that are installed in the terminal device 120, the DU 1, the DU 2, the DU 3, and the CU and that have corresponding functions. This is not limited in embodiments of this application. The following uses an example in which the method 600 is performed by the terminal device 120, the DU 1, the DU 2, the DU 3, and the CU for description. As shown in FIG. 6A and FIG. 6B, the method 600 includes the following steps.

S610: The terminal device 120 sends measurement report information to the DU 1.

S620: The DU 1 sends an UL RRC message transfer message to the CU.

S630: The CU determines to initiate an LTM configuration procedure.

For descriptions of S610 to S630, refer to the foregoing descriptions of S310 to S330. Details are not described herein again.

S640: The CU 1 sends a UE context setup request message to the DU 2.

Optionally, the CU 1 may also send a UE context setup request message to the DU 3.

S650: The DU 2 sends a UE context setup response message to the CU.

Optionally, the DU 3 may also send a UE context setup response message to the CU.

For descriptions of S640 and S650, refer to the foregoing descriptions of S340 and S350. Details are not described herein again.

Optionally, the CU may request, via one UE context setup request message, LTM configuration procedures of candidate cells managed by the DU 2 and the DU 3, or each candidate cell has one UE context setup request message.

S660: The CU 1 sends a DL RRC message transfer message to the DU 1.

S670: The DU 1 sends an RRCReconfiguration message to the terminal device 120.

S680: The terminal device 120 sends an RRCReconfigurationComplete message to the DU 1.

S690: The DU 1 sends the RRCReconfigurationComplete message to the CU1 via UL RRC information.

For descriptions of S660 to S690, refer to the foregoing descriptions of S260 to S290. Details are not described herein again.

It should be noted that the terminal device 120 and the DU 1 maintain a TA of a serving cell group, and the serving cell group includes at least one serving cell. All serving cells in the serving cell group correspond to the same TA, and store a latest TA value used by the terminal device 120 to determine the TA for sending uplink transmission in the serving cell. All the serving cells in the serving cell group belong to the DU 1. The TA of the serving cell group is determined by using a downlink reference signal of a secondary timing advance group (secondary timing advance group, STAG) of one of the serving cells or a primary timing advance group (primary timing advance group, PTAG) of a primary cell for current carrier aggregation (carrier aggregation, CA) as a reference for the TA.

It should be noted that the terminal device 120 does not need to sense a DU, but only needs to sense a candidate cell. The DU may sense whether the candidate cell belongs to the DU.

S6100: The DU 1 sends a command 1 and a command 2 to the terminal device 120.

Correspondingly, the terminal device 120 receives the command 1 and the command 2 from the DU 1. The command 1 is used to instruct or trigger the terminal device 120 to send a contention-free random access preamble 1 in a candidate cell 1, and the contention-free random access preamble 1 is used to determine a TA of the candidate cell 1. The command 2 is used to instruct or trigger the terminal device 120 to send a contention-free random access preamble 2 in a candidate cell 2, and the contention-free random access preamble 2 is used to determine a TA of the candidate cell 2. The command 1 includes an identifier of the candidate cell 1, and the command 2 includes an identifier of the candidate cell 2.

It may be understood that the DU 1 may send either of the command 1 and the command 2 to the terminal device 120, in other words, trigger the terminal device 120 to initiate a random access procedure for either of the candidate cell 1 and the candidate cell 2. Therefore, S6100 is merely used as an example for understanding.

It may be understood that the command 1 includes contention-free random access configuration information 1 used to send the contention-free random access preamble 1, and the command 2 includes contention-free random access configuration information 2 used to send the contention-free random access preamble 2. The candidate cell 2 belongs to the DU 2, and the candidate cell 1 belongs to the DU 3.

S6110a: The terminal device 120 sends the contention-free random access preamble 1 in the candidate cell 2.

Correspondingly, the DU 2 receives the contention-free random access preamble 1 from the terminal device 120, and determines the TA of the candidate cell 2 based on the contention-free random access preamble 1.

S6110b: The terminal device 120 sends the contention-free random access preamble 2 in the candidate cell 1.

Correspondingly, the DU 3 receives the contention-free random access preamble 2 from the terminal device 120, and determines the TA of the candidate cell 1 based on the contention-free random access preamble 2.

Optionally, in S6120a, the DU 2 sends an RAR message 1 to the terminal device 120.

Correspondingly, the terminal device 120 receives the RAR message 1 from the DU 2. The RAR message 1 includes the TA of the candidate cell 2. The TA of the candidate cell 2 is an absolute TA value. The terminal device 120 may determine, based on the absolute TA value of the candidate cell 2, an uplink timing advance of uplink transmission in the candidate cell 2.

Optionally, in S6120b, the DU 3 sends an RAR message 2 to the terminal device 120.

Correspondingly, the terminal device 120 receives the RAR message 2 from the DU 3. The RAR message 2 includes the TA of the candidate cell 1. The TA of the candidate cell 1 is an absolute TA value. The terminal device 120 may determine, based on the absolute TA value of the candidate cell 1, an uplink timing advance of uplink transmission in the candidate cell 1.

By using S6110 to S6120, the terminal device 120 completes random access procedures for the candidate cell 1 and the candidate cell 2, and obtains the TA of the candidate cell 1 and the TA of the candidate cell 2.

S6130: The terminal device 120 sends a measurement report of the candidate cell 2 to the DU 1.

Correspondingly, the DU 1 receives the measurement report of the candidate cell 2 from the terminal device 120.

S6140: The DU 1 determines that the terminal device 120 is switched to the candidate cell 2.

S6150: The DU 1 sends an LTM command 1 to the terminal device 120.

Correspondingly, the terminal device 120 receives the LTM command 1. The LTM command 1 includes an identifier of a target cell.

S6160: The DU 1 sends signaling 1 to the CU.

Correspondingly, the CU receives the signaling 1 from the DU 1. The signaling 1 includes information about a TA of a source serving cell.

Optionally, the signaling 1 may further include information about the TA of the candidate cell 1.

More specifically, the DU 3 may send the information about the TA of the candidate cell 1 to the DU 1 by using the CU.

Optionally, the DU 1 may determine validity of the TA of the source serving cell by using a timing advance timer (timing advance timer, TAT). Optionally, the DU 3 may also determine validity of the candidate cell 1 by using the TAT.

S6170: The CU sends signaling 2 to the DU 2.

Correspondingly, the DU 2 receives the signaling 2 from the CU. The signaling 2 includes the information about the TA of the source serving cell and the information about the TA of the candidate cell 1.

S6180: The terminal device 120 sends an initial message to the DU 2.

Correspondingly, the DU 2 receives the initial message from the terminal device 120. The initial message is a first message for switching to the target cell, is used to request to access the target cell, and includes an RRCReconfigurationComplete message, a cell radio network temporary identifier (cell-radio network temporary identifier, C-RNTI), or other content.

Further, the DU 2 determines, based on the initial message, that the terminal device 120 successfully accesses the candidate cell 2.

S6190: The DU 2 sends an access success message to the CU.

Correspondingly, the CU receives the access success message from the DU 2.

Specifically, after the DU 2 determines that the terminal device 120 is successfully switched to the candidate cell 2, the DU 2 may send, to the CU, the access success message including the identifier of the target cell. Further, the CU determines, based on the identifier of the target cell carried in the access success message, that the terminal device 120 is successfully switched to the candidate cell 2.

After the terminal device 120 is switched to the candidate cell 2, the DU 2 determines, based on the information about the TA, not to perform random access procedures for the source serving cell and the candidate cell 1 before a subsequent switch.

Further, the DU 2 sends an LTM command to the terminal device 120, where the LTM command includes the identifier of the target cell and indication information 1. The terminal device 120 accesses the target cell in a random access channel-skip manner based on the LTM command, and transmits uplink data based on a TA of the target cell. For content of this part, refer to the foregoing descriptions.

Optionally, the DU 2 may further receive information about a TA of a candidate cell 3. Based on the obtained information about the TA of the candidate cell 3 (the candidate cell 3 belongs to the DU 3, not shown in FIG. 6A and FIG. 6B), the DU 2 does not need to trigger the terminal device 120 to initiate a random access procedure for the candidate cell in which the information about the TA has been obtained. This reduces a quantity of random access procedures that need to be initiated by the terminal device 120.

In conclusion, the DU 2 may determine, based on the obtained information about the TA of the candidate cell, that the terminal device 120 does not need to be triggered to initiate the random access procedure for the candidate cell in which the information about the TA has been obtained. This can effectively reduce the quantity of random access procedures that need to be initiated by the terminal device 120. Therefore, power consumption and random access interference of the terminal device 120 can be reduced. For descriptions of the information about the TA, refer to the foregoing descriptions. Details are not described herein again.

According to the foregoing technical solution, in this application, the DU 2 obtains information about TAs of a plurality of candidate cells from the CU, and determines, based on the information about the TAs of the plurality of candidate cells, that the terminal device 120 does not need to be triggered to initiate random access procedures for the plurality of candidate cells. Therefore, the quantity of random access procedures initiated by the terminal device 120 can be reduced, and power consumption of the terminal device 120 can be reduced.

It should be noted that the foregoing message names are merely used as examples for description, and are not used as a final limitation. A message name that has a similar or same function and that is used in a future standard may be used. This is uniformly described herein. Details are not described below again.

It should be noted that some of the foregoing procedures may be optional and unnecessary. For example, the DU 1 only indicates the terminal device 120 to send the contention-free random access preamble 1 to the DU 2, but does not indicate the terminal device 120 to send the contention-free random access preamble 2 to the DU 3. For example, the DU 1 sends only the command 1 to the terminal device 120.

It should be noted that the method 600 may be further applied to a scenario of interaction between base stations. For example, the DU 1 and the CU belong to a base station 1, and the DU 2 and the DU 3 belong to a base station 2. For a method for interaction between base stations, refer to the method for interaction inside the base station. Details are not described herein again.

When the method 600 is applied to the scenario of interaction between base stations, a name of the foregoing message may be changed. For example, the UE context setup request message is changed to a HO (handover) request, and the UE context setup response message is changed to a HO response.

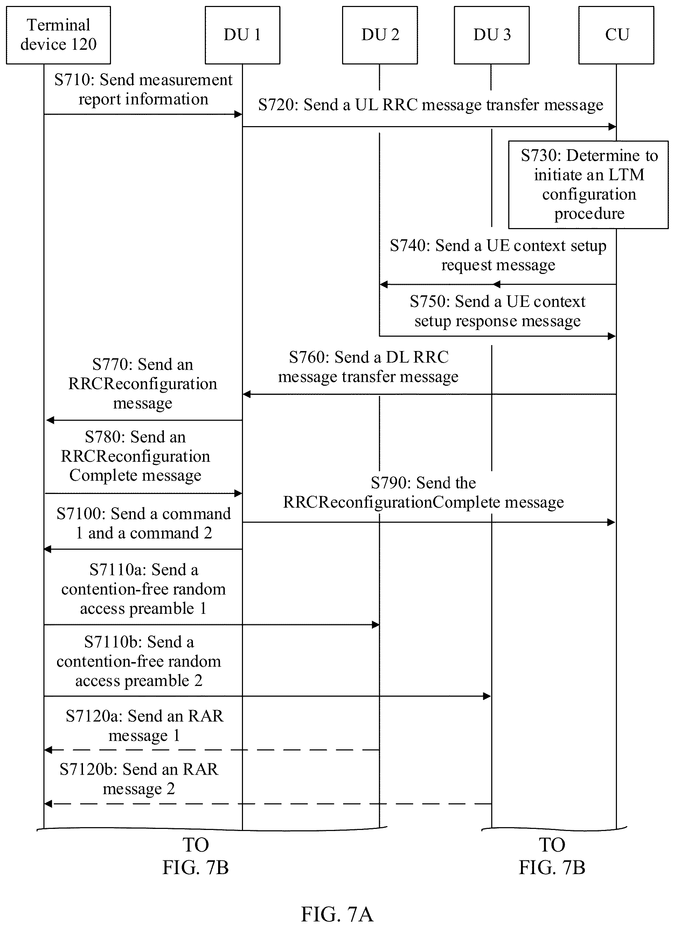

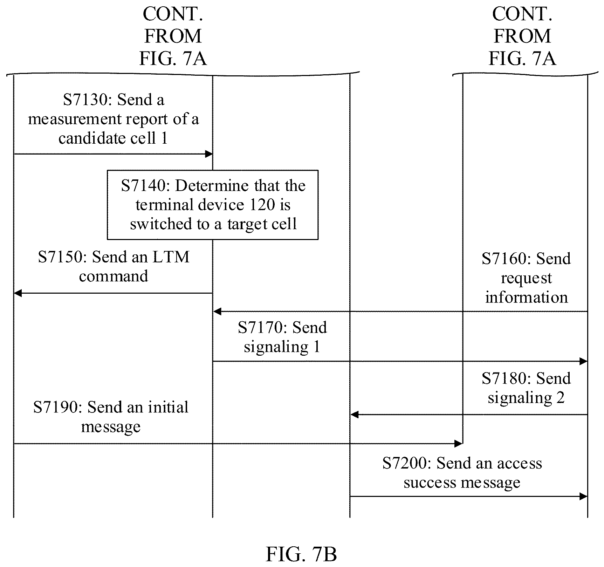

FIG. 7A and FIG. 7B are a schematic interaction flowchart of a communication method 700 according to an embodiment of this application. The method 700 may be performed by a terminal device 120, a DU 1, a DU 2, a DU 3, and a CU, or may be performed by modules and/or components (for example, chips or integrated circuits) that are installed in the terminal device 120, the DU 1, the DU 2, the DU 3, and the CU and that have corresponding functions. This is not limited in embodiments of this application. As shown in FIG. 7A and FIG. 7B, the method 700 includes the following steps.

For S710 to S7150, refer to the descriptions of S610 to S6150. Details are not described herein again.

S7160: The CU sends request information to the DU 1.

Correspondingly, the DU 1 receives the request information from the CU, where the request information is used to request to obtain information about a TA of at least one of a source serving cell and a candidate cell 1.

Optionally, the DU 1 may determine validity of a TA of the source serving cell by using a TAT.

Optionally, the DU 3 may also determine validity of the candidate cell 1 by using the TAT.

For S7170 to S7200, refer to the descriptions of S6160 to S6190. Details are not described herein again.

After the terminal device 120 is switched to a candidate cell 2, the DU 2 does not need to trigger, based on the information about the TA, the terminal device 120 to initiate random access procedures for the source serving cell and the candidate cell 1. When the DU 2 determines that the terminal device 210 is switched to the candidate cell 1, the DU 2 indicates the terminal device 120 to access the candidate cell 1 in a random access channel-skip manner.

Correspondingly, the DU 2 sends an LTM command to the terminal device 120, where the LTM command includes an identifier of a target cell of a switch and indication information 1. The terminal device 120 accesses the target cell in the random access channel-skip manner based on the LTM command, and may transmit uplink data based on a TA of the target cell. For content of this part, refer to the foregoing descriptions.

For descriptions of the information about the TA, refer to the foregoing descriptions. Details are not described herein again.

In the method 700, this application is described by using an example in which the CU obtains the information about the TA of at least one of the source serving cell and the candidate cell 1 by sending the request information to the DU 1. However, a scenario in which the CU sends the request information to the DU 1 to obtain information about the TA of the source serving cell or information about a TA of the candidate cell 1 is not limited.

According to the foregoing technical solution, in this application, the DU 2 obtains information about TAs of a plurality of candidate cells from the CU, and determines, based on the information about the TAs, that the terminal device 120 does not need to be triggered to initiate random access procedures for the plurality of candidate cells. Therefore, a quantity of random access procedures initiated by the terminal device 120 can be reduced, and power consumption of the terminal device 120 can be reduced.

It should be noted that the method 700 may be further applied to a scenario of interaction between base stations. For example, the DU 1 and the CU belong to a base station 1, and the DU 2 and the DU 3 belong to a base station 2. For a method for interaction between base stations, refer to the method for interaction inside the base station. Details are not described herein again.

When the method 700 is applied to the scenario of interaction between base stations, a name of the foregoing message may be changed. For example, a UE context setup request message is changed to a HO request, and a UE context setup response message is changed to a HO response.

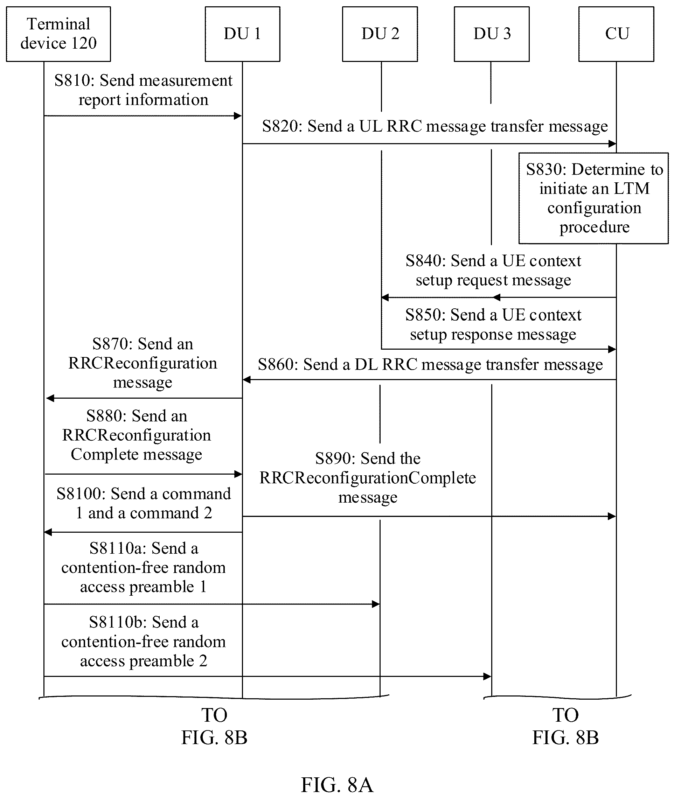

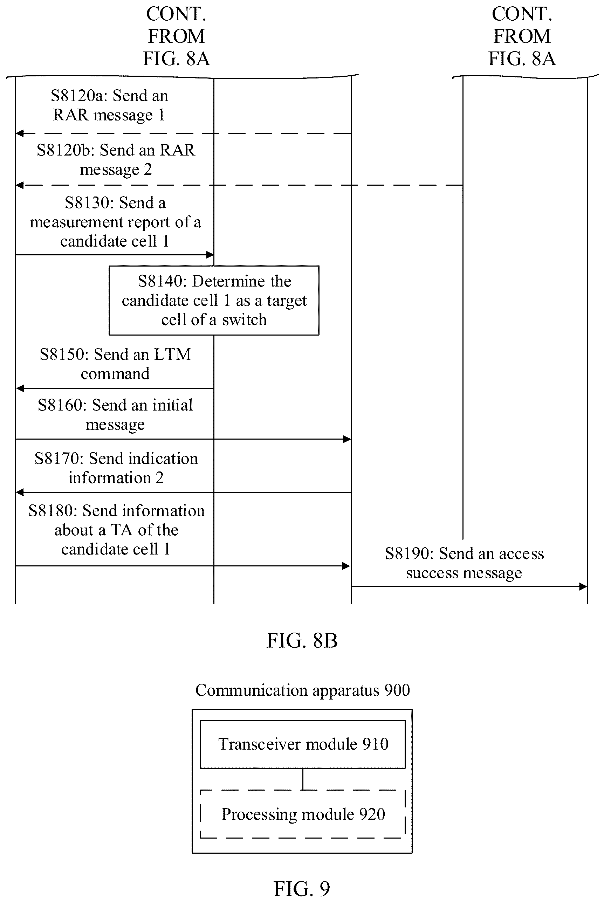

FIG. 8A and FIG. 8B are a schematic interaction flowchart of a communication method 800 according to an embodiment of this application. The method 800 may be performed by a terminal device 120, a DU 1, a DU 2, a DU 3, and a CU, or may be performed by modules and/or components (for example, chips or integrated circuits) that are installed in the terminal device 120, the DU 1, the DU 2, the DU 3, and the CU and that have corresponding functions. This is not limited in embodiments of this application. As shown in FIG. 8A and FIG. 8B, the method 800 includes the following steps.

For S810 to S8150, refer to the descriptions of S610 to S6150. Details are not described herein again.

S8160: The terminal device 120 sends an initial message to the DU 2.

S8170: The DU 2 sends indication information 2 to the terminal device 120.

S8180: The terminal device 120 sends information about a TA of a candidate cell 1 to the DU 2.

After the terminal device 120 is switched to a candidate cell 2, the DU 2 does not need to trigger, based on the information about the TA, the terminal device 120 to initiate random access procedures for a source serving cell and the candidate cell 1. When the DU 2 determines that the terminal device 210 is switched to the candidate cell 1, the DU 2 indicates the terminal device 120 to access the candidate cell 1 in a random access channel-skip manner.

Correspondingly, the DU 2 sends an LTM command to the terminal device 120, where the LTM command may include an identifier of a target cell of a switch and an indication message 2. The terminal device 120 determines, based on the LTM command, to access the target cell in the random access channel-skip manner, and may transmit uplink data based on a TA of the source serving cell or the TA of the candidate cell 1. For content of this part, refer to the foregoing descriptions. Details are not described herein again.

For descriptions of the information about the TA, refer to the foregoing descriptions. Details are not described herein again.

S8190: The DU 2 sends an access success message to the CU.

In the method 800, this application is described by using an example in which the DU 2 obtains the information about the TA of the candidate cell 1 (or may obtain information about the TA of the source serving cell) from the terminal device 120. However, a scenario in which the DU 2 obtains the information about the TA of the serving cell from the terminal device 120 is not limited.

According to the foregoing technical solution, in this application, the DU 2 obtains information about TAs of a plurality of candidate cells from the terminal device 120, and determines, based on the information about the TAs, that the terminal device 120 does not need to be triggered to initiate random access procedures for the plurality of candidate cells. Therefore, a quantity of random access procedures initiated by the terminal device 120 can be reduced, and power consumption of the terminal device 120 can be reduced.

It should be noted that the method 900 may be further applied to a scenario of interaction between base stations. For example, the DU 1 and the CU belong to a base station 1, and the DU 2 and the DU 3 belong to a base station 2. For a method for interaction between base stations, refer to the method for interaction inside the base station. Details are not described herein again.

When the method 900 is applied to the scenario of interaction between base stations, a name of the foregoing message may be changed. For example, a UE context setup request message is changed to a HO request, and a UE context setup response message is changed to a HO response.

The foregoing describes the method embodiments in embodiments of this application, and the following describes corresponding apparatus embodiments.

To implement functions in the methods provided in embodiments of this application, a terminal and a network device each may include a hardware structure and/or a software module, to implement the functions in a form of the hardware structure, the software module, or a combination of the hardware structure and the software module. Whether a function in the functions is performed in a manner of the hardware structure, the software module, or the combination of the hardware structure and the software module depends on particular applications and design constraints of the technical solutions.

FIG. 9 is a block diagram of a communication apparatus 900 according to an embodiment of this application. The communication apparatus 900 may be the network device or the terminal device in the foregoing embodiments, or may be a chip or a module in the network device or the terminal device, and is configured to implement the methods in the foregoing embodiments. The communication apparatus 900 includes a transceiver module 910. The following describes the transceiver module 910 by using an example.

The transceiver module 910 may include a sending module and a receiving module that are respectively configured to implement a sending function or a receiving function in the foregoing method embodiments. The communication apparatus 900 may further include a processing module, configured to implement a function other than sending or receiving.

When the communication apparatus 900 is configured to implement a function of the network device, for example, the transceiver module 910 is configured to receive information about a TA of a candidate cell 1, and the transceiver module 910 is further configured to send, to a terminal device 120, an identifier of a target cell 1 of a switch, indication information 1, and the like.

Optionally, the communication apparatus 900 may further include the processing module 920. The processing module 920 is configured to perform a function other than the receiving and sending functions, for example, determine the indication information 1.

Optionally, the communication apparatus 900 further includes a storage module 930 (which is not shown in FIG. 9). The storage module 930 is configured to store a program or code used to perform the foregoing method.

The content is merely used as an example for description. When the communication apparatus 900 is configured to implement the network device, the communication apparatus 900 is responsible for performing the method or steps related to the network device in the foregoing method embodiment.

The communication apparatus 900 is a terminal device 120. For example, the transceiver module 910 is configured to report information about a TA of a candidate cell 1 to a network device.

It should be understood that when the communication apparatus 900 is the terminal device 120, the transceiver module 910 may be a module that is in a control unit/subscriber unit/distributed unit of the terminal device 120 and that is configured to implement the receiving and sending functions.

Optionally, the communication apparatus 900 may further include the processing module 920. The processing module 920 is configured to perform a function other than the receiving and sending functions, for example, determine the information about the TA of the candidate cell 1.

Optionally, the communication apparatus 900 further includes a storage module 930 (which is not shown in FIG. 9). The storage module 930 is configured to store a program or code used to perform the foregoing method.

The content is merely used as an example for description. When the communication apparatus 900 is configured to implement a function of the terminal device 120, the communication apparatus 900 is responsible for performing the method or steps related to the terminal device 120 in the foregoing method embodiment.

In addition, for implementation of each operation in FIG. 9, refer to corresponding descriptions of the content shown in the foregoing method embodiment. Details are not described herein again.

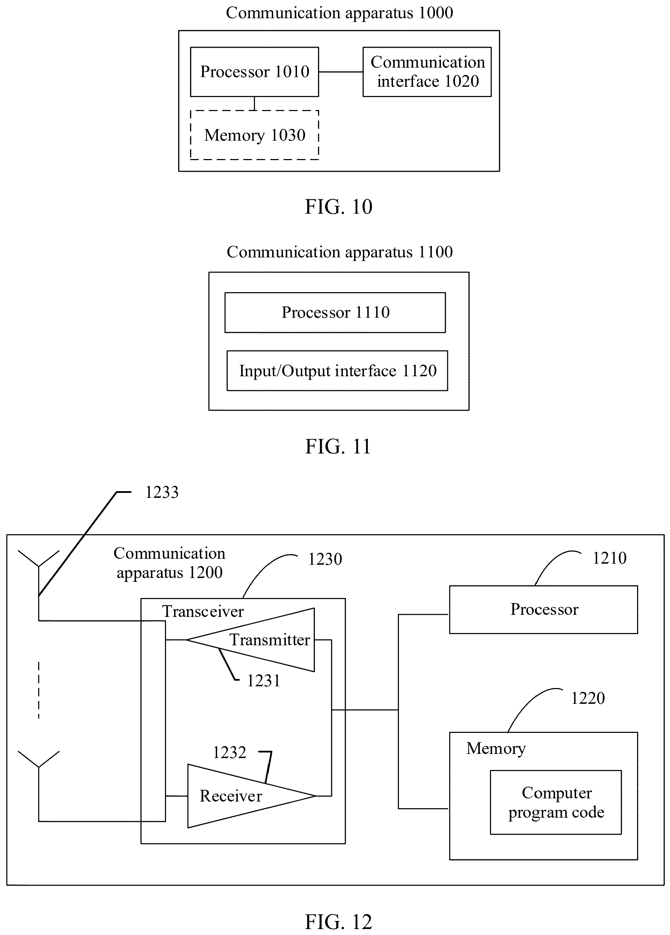

FIG. 10 is a block diagram of a communication apparatus 1000 according to an embodiment of this application. The communication apparatus 1000 includes a processor 1010 and a communication interface 1020. The processor 1010 and the communication interface 1020 can be connected to each other through a bus 1040 (which is not shown in FIG. 10). The communication apparatus 1000 can be configured to implement a function of the terminal device, and can also be configured to implement a function of the network device.

Optionally, the communication apparatus 1000 further includes a memory 1030.

The memory 1030 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory is any other medium that can be configured to carry or store expected program code in a form of an instruction or a data structure and that can be accessed by a computer, but is not limited thereto. For example, the memory 1030 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly completed by a hardware processor, or may be completed by using a combination of hardware in the processor and a software module. For example, the processor 1010 may be one or more central processing units (central processing units, CPU). When the processor 1010 is one CPU, the CPU may be a single-core CPU, or may be a multi-core CPU.

When the communication apparatus 1000 is configured to implement a function of a terminal device 120, for example, the processor 1010 is configured to perform the following operations: determining information about a TA of a candidate cell 1; and reporting the information about the TA of the candidate cell 1 to a network device.

The content is merely used as an example for description. When the communication apparatus 1000 is configured to implement the function of the terminal device 120, the communication apparatus 1000 is responsible for performing the method or steps related to the terminal device 120 in the foregoing method embodiment.

When the communication apparatus 1000 is configured to implement the function of the network device, for example, the processor 1010 is configured to perform the following operations: receiving information about a TA of a candidate cell 1; and sending an identifier of a target cell 1 of a switch and indication information 1 to a terminal device 120.

The content is merely used as an example for description. When the communication apparatus 1000 is configured to implement the function of the network device, the communication apparatus 1000 is responsible for performing the method or steps related to the network device in the foregoing method embodiment.

The foregoing descriptions are merely an example for description. For specific content, refer to the content shown in the method embodiment. In addition, for implementation of each operation in FIG. 10, refer to the corresponding descriptions of the method embodiment shown in FIG. 3.

The communication apparatuses shown in FIG. 9 and FIG. 10 are configured to implement the content described in the foregoing method embodiments. Therefore, for specific execution steps and methods of the communication apparatuses shown in FIG. 9 and FIG. 10, refer to the content described in the foregoing method embodiments.

It should be understood that the foregoing transceiver module may include a sending module and a receiving module. The sending module is configured to perform a sending action of the communication apparatus, and the receiving module is configured to perform a receiving action of the communication apparatus. For ease of description, the sending module and the receiving module are combined into one transceiver module in embodiments of this application. Unified descriptions are provided herein. Details are not described below again.

FIG. 1100 is a diagram of a communication apparatus 1100 according to an embodiment of this application. The communication apparatus 1100 may be configured to implement a function of the network device or the terminal device in the foregoing method. The communication apparatus 1100 may be a chip in the network device or the terminal device. The communication apparatus 1100 includes an input/output interface 1120 and a processor 1110. The input/output interface 1120 may be an input/output circuit. The processor 1110 may be a signal processor, a chip, or another integrated circuit that can implement the methods in this application. The input/output interface 1120 is configured to input or output a signal or data.

For example, the communication apparatus 1100 is a terminal device 120, and the input/output interface 1120 is configured to report information about a TA of a candidate cell 1 to a network device. The processor 1111 is configured to determine the information about the TA of the candidate cell 1. The processor 1111 is further configured to perform some or all of steps of any method provided in this application.

For example, the communication apparatus 1100 is the network device, and the input/output interface 1120 is configured to send an identifier of a target cell 1 of a switch, indication information 1, and the like to a terminal device 120.

In a possible implementation, the processor 1111 executes instructions stored in a memory, to implement the function implemented by the terminal device 120 or the network device.

Optionally, the communication apparatus 1100 further includes the memory. Optionally, the processor and the memory are integrated together. Optionally, the memory is outside the communication apparatus 1100.

In a possible implementation, the processor 1111 may be a logic circuit, and the processor 1111 inputs/outputs a message or signaling via the input/output interface 1120. The logic circuit may be a signal processor, a chip, or another integrated circuit that can implement the methods in embodiments of this application.

The foregoing descriptions of the communication apparatus 1100 in FIG. 11 are merely an example for description. The communication apparatus 1100 can be configured to perform the methods in the foregoing embodiments. For specific content, refer to the descriptions in the foregoing method embodiments. Details are not described herein again.

FIG. 12 is a block diagram of a communication apparatus 1200 according to an embodiment of this application. The communication apparatus 1200 may be a network device, or may be a chip. The communication apparatus 1200 may be configured to perform the foregoing operations performed by the network device.

When the communication apparatus 1200 is the network device, for example, a base station, FIG. 12 is a diagram of a simplified structure of the base station. The base station includes a module 1210, a module 1220, and a module 1230. The module 1210 is mainly configured to: perform baseband processing, control the base station, and the like. The module 1210 is usually a control center of the base station, may be usually referred to as a processor, and is configured to control the base station to perform a processing operation on a network device side in the foregoing method embodiment. The module 1220 is mainly configured to store computer program code and data. The module 1230 is mainly configured to receive and send a radio frequency signal and perform conversion between the radio frequency signal and a baseband signal. The module 1230 may be usually referred to as a transceiver module, a transceiver circuit, a transceiver, or the like. A transceiver module in the module 1230 may also be referred to as a transceiver or the like, and includes an antenna 1233 and a radio frequency circuit (which is not shown in FIG. 12), where the radio frequency circuit is mainly configured to perform radio frequency processing. Optionally, a component that is configured to implement a receiving function and that is in the module 1230 may be considered as a receiver, and a component configured to implement a sending function may be considered as a transmitter. In other words, the module 1230 includes a receiver 1232 and a transmitter 1231. The receiver may also be referred to as a receiving module, a receiver machine, a receiver circuit, or the like, and the transmitter may be referred to as a transmitting module, a transmitter machine, a transmitter circuit, or the like.

The module 1210 and the module 1220 each may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

In an implementation, the transceiver module in the module 1230 is configured to perform a receiving and sending-related process performed by the network device in the embodiments shown in FIG. 4 to FIG. 8B. The processor in the module 1210 is configured to perform a processing-related process performed by the network device in the embodiments shown in FIG. 4 to FIG. 8B.

In another implementation, the processor in the module 1210 is configured to perform a processing-related process performed by the network device in the embodiments shown in FIG. 4 to FIG. 8B.

In another implementation, the transceiver module in the module 1230 is configured to perform a receiving and sending-related process performed by the network device in the embodiments shown in FIG. 4 to FIG. 8B.

It should be understood that, FIG. 12 is merely an example rather than a limitation, and the foregoing access network device including the processor, the memory, and the transceiver may not depend on the structures shown in FIG. 9 to FIG. 11.

When the communication apparatus 1200 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

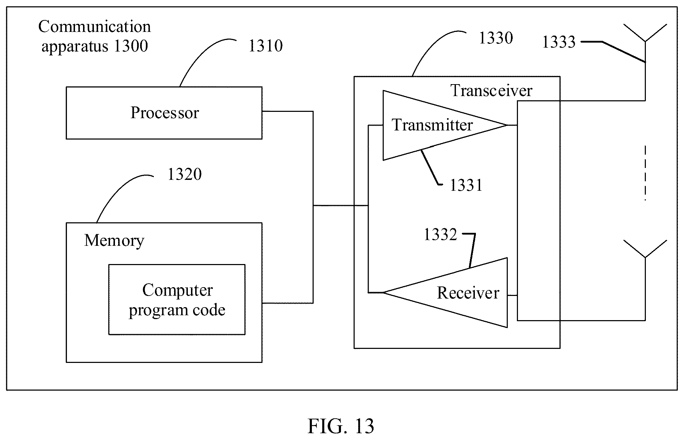

FIG. 13 is a block diagram of a communication apparatus 1300 according to an embodiment of this application. The communication apparatus 1300 may be a terminal device, a processor of the terminal device, or a chip. The communication apparatus 1300 may be configured to perform the operations performed by the terminal device in the foregoing method embodiments.

When the communication apparatus 1300 is the terminal device, FIG. 13 is a diagram of a simplified structure of the terminal device. As shown in FIG. 13, the terminal device includes a processor, a memory, and a transceiver. The memory may store computer program code. The transceiver includes a transmitter 1331, a receiver 1332, a radio frequency circuit (which is not shown in FIG. 13), an antenna 1333, and an input/output apparatus (which is not shown in FIG. 13).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatuses.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 13 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 13, the terminal device includes a processor 1310, a memory 1320, and a transceiver 1330. The processor 1310 may also be referred to as a processing unit, a processing board, a processing module, a processing apparatus, or the like, and the transceiver 1330 may also be referred to as a transceiver unit, a transceiver apparatus, or the like.

Optionally, a component that is in the transceiver 1330 and that is configured to implement a receiving function may be considered as a receiving module, and a component that is in the transceiver 1330 and that is configured to implement a sending function may be considered as a sending module. In other words, the transceiver 1330 includes a receiver and a transmitter. The transceiver may also be sometimes referred to as a transceiver module, a transceiver circuit, or the like. The receiver may also be sometimes referred to as a receiving module, a receiver circuit, or the like. The transmitter may also be sometimes referred to as a transmitting module, a transmitter circuit, or the like.

For example, in an implementation, the processor 1310 is configured to perform a processing action on a terminal device side in embodiments shown in FIG. 4 to FIG. 8B, and the transceiver 1330 is configured to perform receiving and sending actions on the terminal device side in FIG. 4 to FIG. 8B.

For example, in an implementation, the processor 1310 is configured to perform a processing action on a terminal device side in embodiments shown in FIG. 4 to FIG. 8B, and the transceiver 1330 is configured to perform receiving and sending actions on the terminal device side in FIG. 4 to FIG. 8B.

It should be understood that FIG. 13 is merely an example rather than a limitation. The network device including the transceiver module and the processing module may not depend on the structures shown in FIG. 9 to FIG. 11.

When the communication apparatus 1300 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke instructions from a memory and run the instructions stored in the memory, so that a communication device on which the chip is installed is enabled to perform the methods in the foregoing examples.

This application further provides another chip, including an input interface, an output interface, and a processor. The input interface, the output interface, and the processor are connected through an internal connection path. The processor is configured to execute code in a memory, and when the code is executed, the processor is configured to perform the methods in the foregoing examples. Optionally, the chip further includes the memory, and the memory is configured to store a computer program or the code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiment is implemented.

This application further provides a computer program. When the computer program is run in a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

This application further provides a communication system. The communication system includes a network device 110, a network device 120, and a core network element. The network device 110 is configured to perform the foregoing methods, the network device 120 is configured to perform the foregoing methods, and the core network element 130 is configured to perform the foregoing methods. For specific descriptions, refer to the foregoing descriptions. Details are not described herein again.

In the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example, an illustration, or a description.

In the descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a ROM, a RAM, a magnetic disk, or an optical disc.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device, the access network device, or the core network device may perform some or all of steps in embodiments of this application. These steps or operations are merely examples. In embodiments of this application, other operations or variations of various operations may be further performed. In addition, the steps may be performed in a sequence different from a sequence shown in embodiments of this application, and not all of operations in embodiments of this application may be performed.

## Claims

1. A communication method, wherein the method is applied to L1/L2 triggered mobility LTM, the method is applied to a terminal device or a chip in the terminal device, and the method comprises:
determining information about a timing advance TA of a first candidate cell; and
reporting the information about the TA of the first candidate cell to a first network device.

2. The method according to claim 1, wherein the method further comprises:
receiving indication information, wherein the indication information indicates to report information about a TA of a candidate cell, and the candidate cell comprises the first candidate cell.

3. The method according to claim 1 or 2, wherein the information about the TA of the first candidate cell comprises at least one of the following:
the TA of the first candidate cell; or
indication information indicating that the TA of the first candidate cell is valid; or
remaining valid time of the TA of the first candidate cell; or
a time offset of the TA of the first candidate cell, wherein the time offset corresponds to duration of the TA of the first candidate cell.

4. The method according to claim 2 or 3, wherein the receiving the indication information comprises:
receiving the indication information and an identifier of a target cell of a switch that are from a second network device, wherein the target cell is a second candidate cell, and the second candidate cell belongs to the first network device; or
receiving the indication information from the first network device.

5. The method according to claim 4, wherein the second candidate cell is different from the first candidate cell.

6. The method according to any one of claims 2 to 5, wherein the indication information indicates to report the information about the TA of the first candidate cell.

7. The method according to any one of claims 1 to 6, wherein the first candidate cell does not belong to the first network device.

8. A communication method, wherein the method is applied to L1/L2 triggered mobility LTM, and comprises:
receiving, by a first network device, information about a timing advance TA of a first candidate cell, wherein the first candidate cell does not belong to the first network device; and
sending, by the first network device, an identifier of a target cell of a switch and first indication information to a terminal device, wherein the first indication information indicates to access the target cell in a random access channel-skip manner, and the target cell is the first candidate cell.

9. The method according to claim 8, wherein the receiving, by the first network device, the information about the TA of the first candidate cell comprises:
receiving, by the first network device, the information about the TA of the first candidate cell from the terminal device; or
receiving, by the first network device, the information about the TA of the first candidate cell from a second network device.

10. The method according to claim 9, wherein the method further comprises:
sending, by the first network device, second indication information to the terminal device, wherein
the second indication information indicates to report information about a TA of a candidate cell; or
the second indication information indicates to report the information about the TA of the first candidate cell.

11. The method according to claim 9 or 10, wherein the method further comprises:
sending, by the first network device, request information to the second network device, wherein the request information is used to request the information about the TA of the first candidate cell.

12. The method according to any one of claims 8 to 11, wherein the information about the TA of the first candidate cell comprises at least one of the following:
the TA of the first candidate cell; or
indication information indicating that the TA of the first candidate cell is valid; or
remaining valid time of the TA of the first candidate cell; or
a time offset of the TA of the first candidate cell, wherein the time offset corresponds to duration of the TA of the first candidate cell.

13. A communication method, wherein the method is applied to L1/L2 triggered mobility LTM, and comprises:
sending, by a first network device, first indication information to a terminal device, wherein the first indication information indicates the terminal device to obtain information about a TA of a first candidate cell; and
sending, by the first network device, an identifier of a target cell of a switch and second indication information to the terminal device, wherein the target cell is a second candidate cell, and the second candidate cell belongs to a second network device, wherein
the second indication information indicates to report the information about the timing advance TA of the first candidate cell to the second network device, wherein the first candidate cell does not belong to the second network device.

14. The method according to claim 13, wherein the information about the TA of the first candidate cell comprises at least one of the following:
the TA of the first candidate cell; or
indication information indicating that the TA of the first candidate cell is valid; or
remaining valid time of the TA of the first candidate cell; or
a time offset of the TA of the first candidate cell, wherein the time offset corresponds to duration of the TA of the first candidate cell.

15. The method according to claim 13 or 14, wherein the second candidate cell is different from the first candidate cell.

16. A communication method, wherein the method is applied to L1/L2 triggered mobility LTM, and comprises:
obtaining, by a first network device, information about a timing advance TA of a first candidate cell, wherein the first candidate cell belongs to the first network device or a third network device, and the information about the TA of the first candidate cell is used to determine to use a random access channel-skip manner; and
sending, by the first network device, the information about the TA of the first candidate cell to a second network device by using a fourth network device.

17. The method according to claim 16, wherein the obtaining, by the first network device, the information about the TA of the first candidate cell comprises:
receiving, by the first network device, the information about the TA of the first candidate cell from the fourth network device; or
receiving, by the first network device, a contention-free random access preamble sent by a terminal device in the first candidate cell; and
determining, by the first network device, the information about the TA of the first candidate cell based on the contention-free random access preamble.

18. The method according to claim 17, wherein the method further comprises:
receiving, by the first network device, request information from the fourth network device, wherein the request information is used to request the information about the TA of the first candidate cell.

19. The method according to any one of claims 16 to 18, wherein the information about the TA of the first candidate cell comprises at least one of the following:
the TA of the first candidate cell; or
indication information indicating that the TA of the first candidate cell is valid; or
remaining valid time of the TA of the first candidate cell; or
a time offset of the TA of the first candidate cell, wherein the time offset corresponds to duration of the TA of the first candidate cell.

20. A communication apparatus, comprising a processor, wherein the processor is configured to enable, by executing a computer program or instructions, or via a logic circuit, the communication apparatus to perform the method according to any one of claims 1 to 19.

21. The communication apparatus according to claim 20, wherein the communication apparatus further comprises a memory, and the memory is configured to store the computer program or the instructions.

22. The communication apparatus according to claim 20 or 21, wherein the communication apparatus further comprises a communication interface, and the communication interface is configured to input and/or output a signal.

23. A communication apparatus, comprising a logic circuit and an input/output interface, wherein
the input/output interface is configured to input and/or output a signal, and the logic circuit is configured to perform the method according to any one of claims 1 to 19.

24. A computer-readable storage medium, wherein the computer-readable storage medium stores a computer program or instructions, and when the computer program or the instructions are run on a computer, the method according to any one of claims 1 to 19 is performed.

25. A computer program product, comprising instructions, wherein when the instructions are run on a computer, the method according to any one of claims 1 to 19 is performed.
